# EUROPEAN PATENT APPLICATION

(11) **EP 4 679 867 A1**
(43) Date of publication of application: **14.01.2026**
(21) Application number: 24784183.6
(22) Date of filing: 29.03.2024
(51) Int. Cl.: H04W 4/24, H04L 12/14, H04M 15/00

(54) **CHARGING METHOD AND DEVICE**

(30) Priority: 07.04.2023 CN 202310417655
(71) Applicant: HUAWEI TECHNOLOGIES CO., LTD., Shenzhen, Guangdong 518129 (CN)
(72) Inventor: CHEN, Shan, Shenzhen, Guangdong 518129 (CN); CHAI, Xiaoqian, Shenzhen, Guangdong 518129 (CN)
(74) Representative: Maiwald GmbH
(86) International application number: PCT/CN2024/084830
(87) International publication number: WO 2024/208098

(57) **Abstract**

A charging method and an apparatus are provided, and may be applied to a process in which a third-party network performs service control and/or data transmission through a network provided by an operator network, to charge a user of a bridge, and enable effective implementation of a service that needs to use the bridge. The method includes: A first network element determines first charging information, and sends the first charging information to a charging function network element, where the first charging information is for charging a third-party network for using a bridge, the first charging information includes information for identifying the bridge and information for determining a user of the bridge, the bridge includes a network-side time-sensitive networking translator NW-TT port and a device-side time-sensitive networking translator DS-TT port, the NW-TT port and the DS-TT port are separately communicatively connected to a device of the third-party network, and the NW-TT port is communicatively connected to the DS-TT port via a user plane network element and an access network device. After receiving the first charging information, the charging function network element performs charging processing based on the first charging information.

## Description

This application claims priority to Chinese Patent Application No. 202310417655.8, filed with the China National Intellectual Property Administration on April 7, 2023 and entitled "CHARGING METHOD AND APPARATUS", which is incorporated herein by reference in its entirety.

### TECHNICAL FIELD

Embodiments of this application relate to the communication field, and in particular, to a charging method and an apparatus.

### BACKGROUND

Time-sensitive networking (time-sensitive networking, TSN) defines a time-sensitive mechanism of Ethernet data transmission, and has a strict determinacy requirement on network transmission. A TSN network is widely used in an industrial Internet (for example, industrial control and machine manufacturing).

A conventional TSN network is usually deployed through a wired Ethernet. With the development of the 5th generation (5th generation, 5G) mobile communication technology, a current operator network may support the TSN. For example, a 5G system (5G system, 5GS) may provide a service for a third-party network (for example, the TSN network) in a form of a bridge. In addition, the 5GS may provide time-sensitive communication (time-sensitive communication, TSC) service transmission and a time synchronization service for a third party. The TSC service transmission provided by the 5GS for the third party may be implemented via the 5GS bridge.

Charging for the current operator network is charging a user terminal for traffic or duration of a data connection session (for example, a protocol data unit (protocol data unit, PDU) session) or charging for a capability exposure event. However, when the third-party network provides a service via a bridge provided by an operator, a charging mechanism of charging the terminal for the traffic or the duration of the PDU session or charging for a user-related event is definitely inapplicable. Consequently, a service that needs to use the bridge cannot be effectively implemented.

### SUMMARY

This application provides a charging method and an apparatus, so that a user of a bridge of an operator can be charged when the bridge or a service provided by the bridge is used, to enable effective implementation of a service that needs to use the bridge.

According to a first aspect, a charging method is provided. The method may be performed by a first network element, may be performed by a component of the first network element, for example, a processor, a chip, or a chip system of the first network element, or may be implemented by a logical module or software that can implement all or a part of functions of the first network element. The method is used in a scenario in which at least one third-party network performs service control and/or data transmission via a bridge provided by an operator network, and includes: A first network element determines first charging information, where the first charging information includes information for identifying the bridge provided by the operator network and information for determining a user of the bridge, the bridge includes a network-side time-sensitive networking translator NW-TT port and a device-side time-sensitive networking translator DS-TT port, the NW-TT port and the DS-TT port are separately communicatively connected to a device of the third-party network, and the NW-TT port is communicatively connected to the DS-TT port via a user plane network element and an access network device. The first network element sends the first charging information to a charging function network element, where the first charging information is for charging the third-party network for using the bridge.

Based on this solution, the charging information sent by the first network element to the charging function network element includes the information for identifying the bridge and the information for determining the user of the bridge, so that the user of the bridge, namely, the third-party network, can be charged for using the bridge provided by the operator network. In this way, implementation of a service that needs to use the bridge can be promoted, or a TSN network can be promoted to use more services via the bridge provided by the operator network. For example, industrial control services that need to use the bridge (for example, a service of controlling a surgery robot of a third network by a doctor control server of the third-party network via the bridge, a service of controlling a terminal unit by a smart grid server via the bridge, a service of interaction between an AR/VR server and an AR/VR terminal via the bridge, interconnection and interworking between workshops inside a factory, and interconnection and interworking between an intranet of the factory and an intranet of an enterprise outside the factory) are enabled to be effectively implemented. In addition, a service that needs to use the bridge for data transmission (for example, a service of data transmission between different networks that belong to a same bridge user) can be enabled to be effectively implemented.

In a possible design, the information for identifying the bridge is an identifier of the bridge and/or an identifier of the user plane network element.

In a possible design, information about the user of the bridge includes at least one of the following: an identifier of an application function network element of the third-party network, a data network name DNN, an identifier of a network slice used by the third-party network, an external group identifier of the third-party network, or an internal group identifier of the third-party network.

In a possible design, the first charging information further includes at least one quota request.

In a possible design, the method further includes: receiving information about the bridge, where the information about the bridge includes information about the NW-TT port and/or information about the DS-TT port.

In a possible design, the method includes: receiving neighbor discovery information of an NW-TT or neighbor discovery information of a DS-TT, where the neighbor discovery information of the NW-TT includes information about a neighbor port of the NW-TT port, and the neighbor discovery information of the DS-TT includes information about a neighbor port of the DS-TT port; and sending second charging information to the charging function network element, where the second charging information includes at least one of the following: the information about the neighbor port of the NW-TT port, the information about the neighbor port of the DS-TT port, a delay on the NW-TT port, a data flow class supported by the NW-TT port, a delay on the DS-TT port, and a data flow class supported by the DS-TT port.

In a possible design, the method further includes: receiving an updated policy and charging control PCC rule for the bridge, where the updated PCC rule for the bridge is for updating a quality of service QoS flow, and the quality of service flow is for carrying a data flow of the third-party network; and sending third charging information to the charging function network element, where the third charging information includes updated quality of service information.

In a possible design, the method further includes: determining that the quality of service flow for carrying the data flow of the third-party network starts, and sending fourth charging information to the charging function network element, where the fourth charging information includes at least one of the following: a TSC assistance container, quality of service information, and a quota request.

In a possible design, the method further includes: receiving a clock drift report, where the clock drift report is for clock adjustment; and sending fifth charging information to the charging function network element, where the fifth charging information includes at least one of the following: a clock drift identifier, time-sensitive communication assistance information TSCAI, obtained through clock adjustment, of the data flow that is of the third-party network and that is transmitted via the bridge, or traffic usage, and the clock drift identifier indicates that a session management network element performs clock adjustment.

In a possible design, the method further includes: receiving an application programming interface API invocation request message sent by an application function entity of the third-party network, where an API is for providing the third-party network with a service of using the bridge, and the API invocation request message includes the information for identifying the bridge, the information about the user of the bridge, and an API operation indication; and the sending the first charging information to a charging function network element includes: sending the first charging information to the charging function network element based on the API invocation request message, where the first charging information includes the information for identifying the bridge, the information about the user of the bridge, and the API operation indication.

In a possible design, the API invocation request message is a policy authorization subscription request message, the policy authorization subscription request message is for subscribing to a change of a PMIC and/or a change of a UMIC, and the policy authorization subscription request message includes that the PMIC is associated with the DS-TT port and/or the NW-TT port and the UMIC is associated with the user plane network element.

In a possible design, the API invocation message is a neighbor discovery information invocation message and/or a neighbor discovery configuration invocation message, where the neighbor discovery information invocation message includes information about the DS-TT port and/or information about the NW-TT port, and the neighbor discovery configuration invocation message is for configuring and activating a link layer discovery protocol LLDP agent; and the first charging information further includes at least one of the following: the information about the DS-TT port and/or the information about the NW-TT port.

In a possible design, the API invocation message includes an AF request message, and the AF request message indicates a transmission demand of a data flow of the third-party network; and the first charging information further includes at least one of the following: TSCAI, a QoS policy, a service data flow filter, and a bridging delay of the bridge.

In a possible design, the API invocation message includes a port status subscription request message, and the port status subscription request message is for subscribing to a port status of the DS-TT port and/or a port status of the NW-TT port; and the first charging information further includes port status subscription information.

In a possible design, the method further includes: sending an API notification message to an application function entity of the third-party network, where an API is for providing the third-party network with a service of using the bridge, and the API notification message includes the information for identifying the bridge, the information about the user of the bridge, and an API operation indication; and the sending the first charging information to a charging function network element includes: sending the first charging information to the charging function network element based on the API notification message, where the first charging information includes information about an execution result of the API operation indication.

In a possible design, the API notification message includes delay information and/or a data flow class, where the delay information includes a delay on the NW-TT port and/or a delay on the DS-TT port, and the data flow class includes at least one of a data flow class supported by the NW-TT port and a data flow class supported by the DS-TT port; and the first charging information further includes at least one of the following: the delay on the NW-TT port, the delay on the DS-TT port, the data flow class supported by the NW-TT port, and the data flow class supported by the DS-TT port.

In a possible design, the API notification message is neighbor discovery notification information, and the neighbor discovery notification information includes first neighbor discovery information and/or second neighbor discovery information, where the first neighbor discovery information includes information about a neighbor port of the NW-TT port, and the second neighbor discovery information includes information about a neighbor port of the DS-TT port; and the first charging information further includes the first neighbor discovery information and/or the second neighbor discovery information.

In a possible design, the API notification message includes port status information, and the port status information indicates a port status of the DS-TT port and/or a port status of the NW-TT port; and the first charging information further includes the port status information.

In a possible design, the method further includes: receiving a message from a centralized network configuration CNC node, where the message from the CNC node is a request message of the third-party network, and the message from the CNC node includes at least one of the following: the information for identifying the bridge, the information about the user of the bridge, and a requested operation indication; and the sending the first charging information to a charging function network element includes: sending the first charging information to the charging function network element based on the message from the CNC node, where the first charging information further includes configuration and management information of the bridge and/or configuration information of a data flow of the third-party network.

In a possible design, the method further includes: receiving, from a policy control network element, information related to the bridge, where the information related to the bridge is information sent to the third-party network, and the information related to the bridge includes at least one of the following: the information for identifying the bridge, the information about the user of the bridge, and an operation indication requested by the third-party network; and the sending the first charging information to a charging function network element includes: sending the first charging information to the charging function network element based on the information related to the bridge, where the first charging information further includes information about an execution result corresponding to a requested operation indication.

In a possible design, the method further includes: receiving a service invocation request message; and the sending the first charging information to a charging function network element includes: sending the first charging information to the charging function network element based on the service invocation request message.

In a possible design, the method further includes: sending a response message for a service invocation request; and the sending the first charging information to a charging function network element includes: sending the first charging information to the charging function network element based on the response message.

According to a second aspect, a charging method is provided. The method may be performed by a charging function network element, may be performed by a component of the charging function network element, for example, a processor, a chip, or a chip system of the charging function network element, or may be implemented by a logical module or software that can implement all or a part of functions of the charging function network element. The method includes: receiving first charging information; and performing charging processing based on the first charging information, where the first charging information includes information for identifying a bridge and information for determining a user of the bridge, the bridge includes a network-side time-sensitive networking translator NW-TT port and a device-side time-sensitive networking translator DS-TT port, the NW-TT port and the DS-TT port are separately communicatively connected to a third-party network, and the NW-TT port is communicatively connected to the DS-TT port via a user plane network element and an access network device. For technical effects brought by the second aspect, refer to the technical effects brought by the first aspect. Details are not described herein again.

In a possible design, the information for identifying the bridge is an identifier of the bridge and/or an identifier of the user plane network element.

In a possible design, information about the user of the bridge includes at least one of the following: an identifier of an application function network element of the third-party network, a data network name DNN, an identifier of a network slice used by the third-party network, an external group identifier of the third-party network, or an internal group identifier of the third-party network.

In a possible design, the first charging information further includes at least one quota request.

In a possible design, the method includes: receiving second charging information, where the second charging information includes at least one of the following: information about a neighbor port of the NW-TT port, information about a neighbor port of the DS-TT port, a delay on the NW-TT port, a data flow class supported by the NW-TT port, a delay on the DS-TT port, and a data flow class supported by the DS-TT port.

In a possible design, the method further includes: receiving third charging information, where the third charging information includes updated quality of service information.

In a possible design, the method further includes: receiving fourth charging information, where the fourth charging information includes at least one of the following: a TSC assistance container, quality of service information, and a quota request.

In a possible design, the method further includes: receiving fifth charging information, where the fifth charging information includes at least one of the following: a clock drift identifier, time-sensitive communication assistance information TSCAI, obtained through clock adjustment, of a data flow that is of the third-party network and that is transmitted via the bridge, or traffic usage, and the clock drift identifier indicates that a session management network element performs clock adjustment.

In a possible design, the method further includes: The first charging information includes the information for identifying the bridge, the information about the user of the bridge, and an API operation indication.

In a possible design, the first charging information further includes at least one of the following: information about the DS-TT port and/or information about the NW-TT port.

In a possible design, the first charging information further includes at least one of the following: TSCAI, a QoS policy, a service data flow filter, and a bridging delay of the bridge.

In a possible design, the first charging information further includes port status subscription information.

In a possible design, the first charging information includes information about an execution result of the API operation indication.

In a possible design, the first charging information further includes at least one of the following: a delay on the NW-TT port, a delay on the DS-TT port, a data flow class supported by the NW-TT port, and a data flow class supported by the DS-TT port.

In a possible design, first neighbor discovery information includes information about a neighbor port of the NW-TT port, and second neighbor discovery information includes information about a neighbor port of the DS-TT port.

In a possible design, the first charging information further includes port status information.

In a possible design, the first charging information further includes configuration and management information of the bridge and/or configuration information of a data flow of the third-party network.

According to a third aspect, a communication apparatus is provided, to implement various methods. The communication apparatus may be the first network element in the first aspect, or an apparatus, for example, a chip or a chip system, included in the first network element; or the communication apparatus may be the charging function network element in the second aspect, or an apparatus, for example, a chip or a chip system, included in the charging function network element. The communication apparatus includes corresponding modules, units, or means (means) for implementing the methods. The modules, the units, or the means may be implemented by using hardware or software, or implemented by hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and any one of the possible implementations thereof. The transceiver module may include a receiving module and a sending module, which are respectively configured to implement a receiving function and a sending function in any one of the foregoing aspects and any one of the possible implementations thereof.

In some possible designs, the transceiver module may include a transceiver circuit, a transceiver, or a communication interface.

According to a fourth aspect, a communication apparatus is provided, and includes a processor and a memory. The memory is configured to store computer instructions. When the processor executes the instructions, the communication apparatus is enabled to perform the method according to any one of the aspects. The communication apparatus may be the first network element in the first aspect, or an apparatus, for example, a chip or a chip system, included in the first network element; or the communication apparatus may be the charging function network element in the second aspect, or an apparatus, for example, a chip or a chip system, included in the charging function network element.

According to a fifth aspect, a communication apparatus is provided, and includes a processor and a communication interface. The communication interface is configured to receive a signal and/or send a signal, and the processor is configured to execute a computer program or instructions, so that the communication apparatus performs the method according to any one of the aspects. The communication apparatus may be the first network element in the first aspect, or an apparatus, for example, a chip or a chip system, included in the first network element; or the communication apparatus may be the charging function network element in the second aspect, or an apparatus, for example, a chip or a chip system, included in the charging function network element.

According to a sixth aspect, a communication apparatus is provided, and includes at least one processor. The processor is configured to execute a computer program or instructions stored in a memory, so that the communication apparatus performs the method according to any one of the aspects. The memory may be coupled to the processor, or may be independent of the processor. The communication apparatus may be the first network element in the first aspect, or an apparatus, for example, a chip or a chip system, included in the first network element; or the communication apparatus may be the charging function network element in the second aspect, or an apparatus, for example, a chip or a chip system, included in the charging function network element.

According to a seventh aspect, a computer-readable storage medium is provided. The computer-readable storage medium stores a computer program or instructions. When the computer program or the instructions are run on a communication apparatus, the communication apparatus is enabled to perform the method according to any one of the aspects.

According to an eighth aspect, a computer program product including instructions is provided. When the computer program product runs on a communication apparatus, the communication apparatus is enabled to perform the method according to any one of the aspects.

According to a ninth aspect, a communication apparatus (for example, the communication apparatus may be a chip or a chip system) is provided. The communication apparatus includes a processor, configured to implement the functions in any one of the aspects.

In some possible designs, the communication apparatus includes a memory. The memory is configured to store necessary program instructions and data.

In some possible designs, when the apparatus is a chip system, the apparatus may include a chip, or may include the chip and another discrete component.

It may be understood that, when the communication apparatus according to any one of the third aspect to the ninth aspect is a chip or a chip system, a sending action/function of the communication apparatus may be understood as information outputting, and a receiving action/function of the communication apparatus may be understood as information inputting.

For technical effects brought by any design manner of the third aspect to the ninth aspect, refer to the technical effects brought by different design manners of the first aspect or the second aspect. Details are not described herein again.

According to a tenth aspect, a communication system is provided. The communication system includes the first network element according to the first aspect and the charging function network element according to the second aspect.

### BRIEF DESCRIPTION OF DRAWINGS

FIG. 1 is a diagram of an architecture of a TSN network according to this application;
FIG. 2 is a diagram of an architecture of a system in which a 5GS is used as a bridge in TSN according to this application;
FIG. 3 is a diagram of an architecture of a system in which a TSCTSF network element is deployed according to this application;
FIG. 4 is a diagram of an architecture of a TSN network corresponding to a case in which a 5GS is used as a TSN bridge according to this application;
FIG. 5 is a diagram of a 5GS bridge information reporting procedure according to this application;
FIG. 6 is a diagram of a 5GS bridge configuration procedure according to this application;
FIG. 7 is a diagram of a port status subscription and reporting procedure according to this application;
FIG. 8a is a diagram of charging-related network elements in a 5GS according to this application;
FIG. 8b is a diagram of another type of charging-related network elements in a 5GS according to this application;
FIG. 9a is a diagram of a structure of a communication system according to this application;
FIG. 9b is a diagram of a structure of another communication system according to this application;
FIG. 10 is a diagram of a structure of a communication device according to this application;
FIG. 11a is a schematic flowchart of a charging method according to this application;
FIG. 11b is a schematic flowchart of a charging method according to this application;
FIG. 12 is a schematic flowchart of a charging method according to this application;
FIG. 13 is a schematic flowchart of a charging method according to this application;
FIG. 14 is a schematic flowchart of a charging method according to this application;
FIG. 15 is a schematic flowchart of a charging method according to this application;
FIG. 16 is a schematic flowchart of a charging method according to this application;
FIG. 17 is a schematic flowchart of a charging method according to this application;
FIG. 18 is a schematic flowchart of a charging method according to this application;
FIG. 19 is a schematic flowchart of a charging method according to this application;
FIG. 20 is a schematic flowchart of a charging method according to this application;
FIG. 21 is a diagram of a structure of a communication apparatus according to this application; and
FIG. 22 is a diagram of a structure of another communication apparatus according to this application.

### DESCRIPTION OF EMBODIMENTS

In the descriptions of this application, unless otherwise specified, "/" indicates that associated objects are in an "or" relationship. For example, A/B may represent A or B. "And/or" in this application merely describes an association relationship between associated objects and indicates that three relationships may exist. For example, A and/or B may represent three cases: Only A exists, both A and B exist, or only B exists, where A and B may be singular or plural.

In the descriptions of this application, "a plurality of" means two or more than two unless otherwise specified. "At least one of the following" or a similar expression thereof means any combination of these items, including a singular item or any combination of plural items. For example, at least one of a, b, or c may indicate: a, b, c, a and b, a and c, b and c, or a, b, and c, where a, b, and c may be singular or plural.

In addition, for ease of clear description of the technical solutions in embodiments of this application, terms such as "first" and "second" are used in embodiments of this application to distinguish between same items or similar items that provide basically same functions. A person skilled in the art may understand that the terms such as "first" and "second" do not limit a quantity or an execution sequence, and the terms such as "first" and "second" do not indicate a definite difference.

In embodiments of this application, a term like "example" or "for example" is for representing giving an example, an illustration, or a description. Any embodiment or design scheme described as an "example" or "for example" in embodiments of this application should not be explained as being more preferred or having more advantages than another embodiment or design scheme. Exactly, use of the term like "example" or "for example" is intended to present a related concept in a specific manner for ease of understanding.

It may be understood that an "embodiment" mentioned in the specification mean that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments in any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if" both mean that corresponding processing is performed in an objective case, are not intended to limit time, do not require a determining action during implementation, and do not mean other limitations.

It may be understood that, in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a demand. Accordingly, an apparatus provided in embodiments of this application may also accordingly implement these features or functions. Details are not described herein.

In this application, unless otherwise specified, for same or similar parts in embodiments, refer to each other. In embodiments of this application and the implementations/implementation methods in embodiments, unless otherwise specified or a logical collision occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship of the technical features. The following implementations of this application do not limit the protection scope of this application.

### 1. Time-sensitive networking (time-sensitive networking, TSN):

The TSN defines a time-sensitive mechanism of data transmission, and has a strict determinacy requirement on network transmission. For example, an extremely low packet loss rate is required, and an end-to-end delay needs to be ensured. The TSN is widely used in fields such as industrial control, machine manufacturing, and transportation.

Standard organizations such as the Internet engineering task force (internet engineering task force, IETF), the institute of electrical and electronics engineers (institute of electrical and electronics engineers, IEEE), and the 3rd generation partnership project (3rd generation partnership project, 3GPP) respectively perform standardized definition on a TSN application scenario, a TSN transmission protocol, support of an operator network (for example, a 5th generation (5th generation, 5G) network) for the TSN, and the like.

Currently, the IEEE 802.1Qcc standard describes three configuration models of the TSN: a fully distributed model, a central network and distributed user model, and a fully central model. The support of the 5G network for the TSN defined in the 3GPP is mainly based on the fully central model.

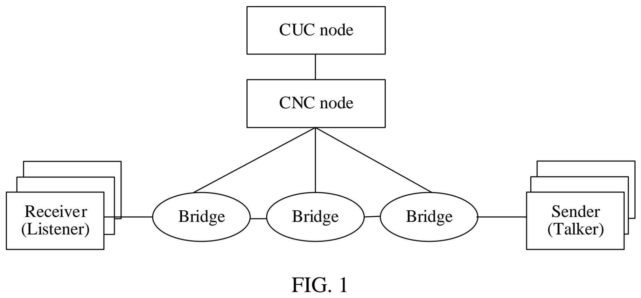

FIG. 1 is a diagram of an architecture of a TSN network in a fully central model. Refer to FIG. 1. The architecture mainly includes a sender (Talker), a receiver (Listener), bridges (Bridges), a centralized user configuration (centralized user configuration, CUC) node, and a centralized network configuration (centralized network configuration, CNC) node. The sender (Talker) and the receiver (Listener) may be collectively referred to as TSN terminals (end stations).

It should be noted that a node quantity and a network topology structure that are shown in FIG. 1 are merely examples. This is not specifically limited in embodiments of this application. The following briefly describes functions of the nodes in FIG. 1.

The CUC node is responsible for discovering and managing a TSN terminal. For example, the CUC node may obtain a service flow demand of the TSN terminal, and send, to the CNC node, a flow creation request carrying the service flow demand; or the CUC node may configure the TSN terminal based on an indication of the CNC node.

The CNC node is responsible for managing a TSN user plane topology (including a topology between each terminal and a bridge) and capability information of the bridge, generating an end-to-end (end-to-end, E2E) path of a service flow and a forwarding rule on each bridge based on the flow creation request that carries the service flow demand and that is provided by the CUC node, and then delivering the forwarding rule on the bridge (for example, information such as a flow feature of the service flow and an identifier of an ingress or egress port during service transmission) and scheduling information (for example, information such as time information of the ingress port and information about flow classification corresponding to the egress port) to the corresponding bridge.

It may be understood that, in embodiments of this application, the CNC node and the CUC node may be respectively understood as a control plane node or a configuration node in a TSN system.

The sender (Talker) is a sender of the service flow. The receiver (Listener) is a receiver of the service flow. For example, the sender may be a command sender of an industrial control service, for example, a doctor control server, a smart grid server, or an artificial reality (artificial reality, AR)/virtual reality (virtual reality, VR) server. The receiver may be a command receiver of the industrial control service, for example, a surgery robot, a terminal unit, or an AR/VR terminal.

The bridge is responsible for reporting the capability information and topology information of the bridge to the CNC node, and scheduling and forwarding the service flow based on the forwarding rule and the scheduling information that are delivered by the CNC node. In addition, in addition to service flow forwarding, the bridge in the TSN further has another function. For example, the bridge has a topology discovery function, determines an identifier of the bridge and a port identifier of the bridge, and supports a protocol like a link layer discovery protocol (link layer discovery protocol, LLDP). For another example, the bridge may determine a transmission delay; and after detecting an internal transmission delay of the bridge, report the detected transmission delay to the CNC node. This is not specifically limited in embodiments of this application.

### 2. 5G system (5th generation system, 5GS) bridge:

Generally, conventional TSN is usually deployed through a wired Ethernet. With the development of mobile communication technologies, a current 5G network has implemented support for TSN, so that a part of connections in the TSN may be wireless, to expand a TSN deployment scenario.

For example, a 5GS may be integrated into the TSN in a form of a TSN bridge. For example, the 5GS is considered as a whole, and is virtualized as a bridge in the TSN. The bridge may be referred to as the 5GS bridge or a 5G bridge.

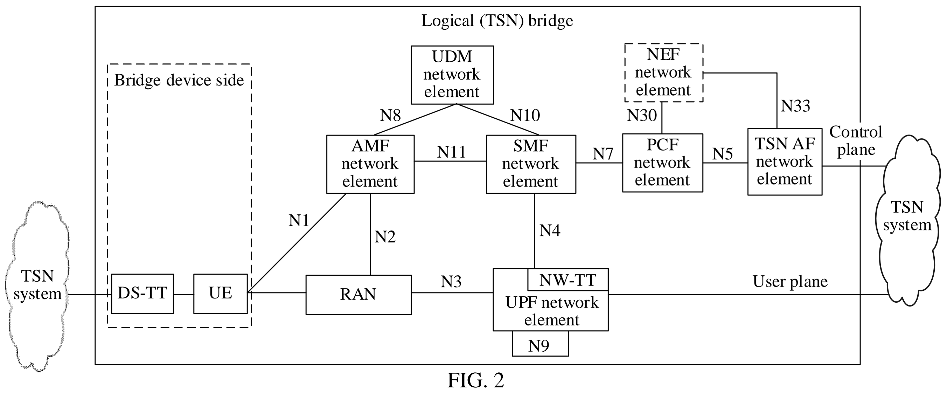

FIG. 2 is a diagram of an architecture of a system in which a 5GS is used as a bridge in TSN, or may be understood as a diagram of an architecture of a system in which a 3GPP network interworks with TSN systems.

Refer to FIG. 2. The system includes a user equipment (user equipment, UE), a radio access network (radio access network, RAN) network element (for example, a next generation NodeB (next generation NodeB, gNB)), a user plane function (user plane function, UPF) network element, an access and mobility management function (access and mobility management function, AMF) network element, a session management function (session management function, SMF) network element, a policy control function (policy control function, PCF) network element, a unified data management function (unified data management, UDM) network element, and the like.

Refer to FIG. 2. To support the TSN, TSN translators (TSN translators, TTs) are newly added to the 5GS. The TTs are for operations between the 5GS and the TSN, and may provide an ingress port and an output port for the 5GS bridge. Further, the TTs may be classified into a device-side TT (device-side TT, DS-TT) and a network-side TT (network-side TT, NW-TT). The DS-TT is located on a UE side, and provides a DS-TT port. The NW-TT is located on a UPF side, and provides an NW-TT port.

Optionally, the UE and the DS-TT may be integrated into one physical device as two function modules, or may be separately and independently deployed in two different physical devices. This is not specifically limited in this application. The NW-TT may be integrated into the UPF network element, or the NW-TT and the UPF network element may be separately and independently deployed. This is not specifically limited in this application.

Generally, the 5GS bridge on a user plane includes the NW-TT port on the UPF side, a user plane tunnel (for example, a protocol data unit (protocol data unit session, PDU) session (session)) between the UE and the UPF, and the DS-TT port.

The PDU session may be an Internet protocol (internet protocol, IP) type PDU session (IP type PDU Session) or an Ethernet type PDU session (Ethernet type PDU Session).

For example, one DS-TT port is associated with only one PDU session, that is, DS-TT ports correspond one-to-one to PDU sessions, to facilitate flow mapping and scheduling management performed by a 5G core (5G core, 5GC).

In addition, to support the TSN, a 5GS core network needs to support a TSN application function (TSN application function, TSN AF) network element. The TSN AF network element may be configured to provide a control plane translator function for integration of the 5GS and a TSN network. A TSN CNC may configure and manage the 5GS bridge via the TSN AF. For example, the TSN AF network element may be understood as a TSN-dedicated application function (application function, AF) network element.

If the TSN AF network element is a trusted network element deployed by an operator, the TSN AF network element may directly interact with the PCF network element through an N5 interface. In some scenarios, the TSN AF network element may not be trusted (that is, be untrusted) by the operator. In this case, the TSN AF network element needs to indirectly interact with the PCF network element via a network exposure function (network exposure function, NEF) network element.

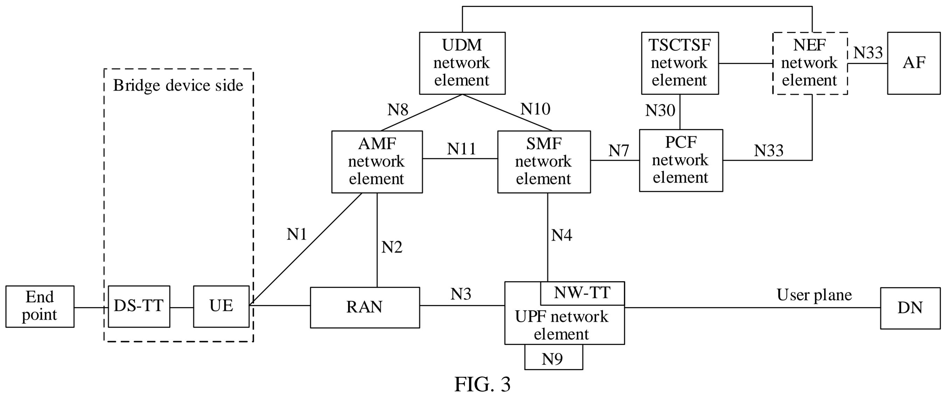

In some implementation scenarios, the 5GS may provide a time-sensitive communication (time-sensitive communication, TSC) service and/or a time synchronization service for a third party. Transmission of the TSC service provided by the 5GS for the third party may be implemented via the 5GS bridge. The time synchronization service provided by the 5GS for the third party may also be implemented via the 5GS bridge. In this case, as shown in FIG. 3, a time-sensitive communication and time synchronization function (time-sensitive communication and time synchronization function, TSCTSF) network element is deployed in the 5GS core network, to support the TSC service and a time synchronization capability. Further, the TSCTSF network element may further support related processing such as bridge management. For example, the TSCTSF network element may manage and control the DS-TT/NW-TT.

As shown in FIG. 3, an AF network element is used by the third party to access the TSC service and/or the time synchronization service. When the AF network element is trusted by the operator, the AF network element may directly interact with the TSCTSF network element. When the AF network element is not trusted (that is, be untrusted) by the operator, the AF network element needs to indirectly interact with the TSCTSF network element via the NEF network element.

A capability of the AF network element in an architecture shown in FIG. 3 may be different from a capability of the TSN AF network element. For example, the AF network element may not be TSN-dedicated. However, in embodiments of this application, a possibility that the AF network element is TSN-dedicated is not excluded. When the AF network element is TSN-dedicated, the AF network element may directly interact with the PCF, or indirectly interact with the PCF network element via the NEF network element. That is, interaction between the AF network element and the PCF network element is not performed via the TSCTSF network element. In this case, it may alternatively be considered that the architecture shown in FIG. 3 is rolled back to the architecture shown in FIG. 2.

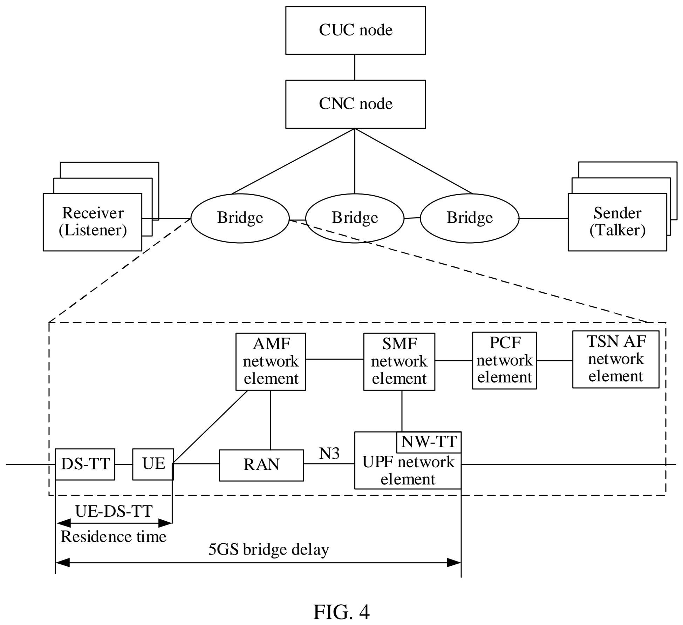

Based on the foregoing descriptions of the 5GS bridge, if a bridge in the TSN architecture shown in FIG. 1 is the 5GS bridge, the architecture shown in FIG. 1 may be refined into an architecture shown in FIG. 4. Refer to FIG. 4. UE-DS-TT residence time and a 5GS bridge delay are involved in the 5GS bridge.

UE-DS-TT residence time (UE-DS-TT Residence Time) refers to a transmission delay of a data packet between the DS-TT and the UE, for example, duration between a moment at which the data packet arrives at the DS-TT and a moment at which the data packet is output from the UE, or duration between a moment at which the data packet arrives at the UE and a moment at which the data packet is output from the DS-TT.

A bridge transmission delay (bridge delay) is a transmission delay of the data packet between the DS-TT and the NW-TT, for example, duration between the moment at which the data packet arrives at the DS-TT and a moment at which the data packet is output from the NW-TT, or duration between a moment at which the data packet arrives at the NW-TT and the moment at which the data packet is output from the DS-TT.

Optionally, the bridge transmission delay may also be referred to as a bridging delay, and the bridge transmission delay and the bridging transmission delay may be mutually replaced. This is not specifically limited in embodiments of this application.

Optionally, there is also UE-DS-TT residence time and a bridge transmission delay in a structure shown in FIG. 3. Refer to the foregoing descriptions. Details are not described herein again.

It should be noted that the foregoing descriptions are merely provided by using an example in which the 5GS provides the bridge for a third-party network to use. A future evolved operator network like a sixth generation (6th generation, 6G) mobile communication system or a seventh generation mobile communication system may also provide a bridge for the third-party network to use. For the bridge provided by the future evolved operator network, refer to the descriptions of the bridge in embodiments of this application. The solutions in embodiments of this application are also applicable to a scenario in which the future evolved operator network provides the bridge for the third-party network to use.

### 3. Bridge information reporting:

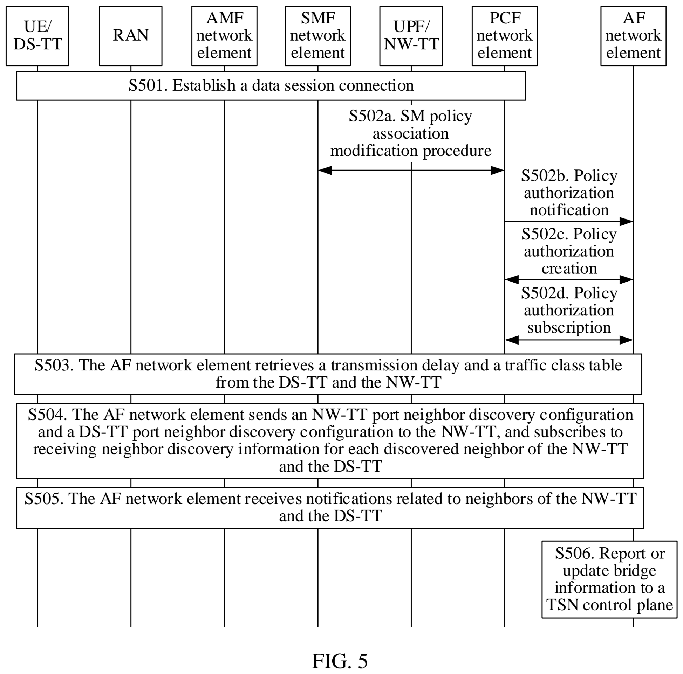

For example, a bridge information reporting procedure may be shown in FIG. 5. Refer to FIG. 5. The reporting procedure includes the following steps.

S501. Establish a data connection session (for example, a PDU session, where the PDU session is used as an example for description subsequently).

Optionally, a PDU session establishment process includes a session management (session management, SM) policy association establishment procedure (SM Policy Association Establishment procedure). In this procedure, an SMF network element may request a PCF network element to establish a policy and charging control (policy and charging control, PCC) rule (rule) for the PDU session.

Optionally, bridge information may be reported and configured in the PDU session establishment process and after PDU session establishment (that is, after the PDU session establishment is completed and before the PDU session is released).

Optionally, a UPF network element may allocate a user-plane node identifier (user-plane node ID) to a bridge, and send the user-plane node identifier to the SMF network element. For example, user-plane node identifiers may be preconfigured in the UPF network element, and the user-plane node identifier allocated by the UPF network element to the bridge may be one of the plurality of preconfigured user-plane node identifiers.

Optionally, the user-plane node identifier in embodiments of this application may also be used as a bridge identifier, and the user-plane node identifier and the bridge identifier may be mutually replaced.

Optionally, after step S501, the SMF network element may learn of the bridge information via the UPF network element. The bridge information includes at least one of the following: the user-plane node identifier, a port number of a DS-TT port, a media access control (media access control, MAC) address of the DS-TT port (for an Ethernet type PDU session), a UE IP address (for an IP type PDU session), UE-DS-TT residence time (if available), or a port management information container (port management information container, PMIC). For example, the PMIC includes port management information and a port number, and the port management information may include port management capabilities of a DS-TT and an NW-TT.

S502a. Perform a session management (session management, SM) policy association modification (SM Policy Association modification) procedure.

Optionally, step S502a may be initiated by the SMF network element. That is, the SMF network element initiates SM policy association modification. For example, the SMF network element may send an SM policy association modification request to the PCF network element, where the SM policy association modification request may include the bridge information learned of by the SMF network element after step S501.

Optionally, after receiving the SM policy association modification request, the PCF network element sends an SM policy association modification response to the SMF network element. The policy association modification response may include an updated PCC rule and the like.

Optionally, a condition for initiating the SM policy association modification by the SMF network element may be defined by a policy control request trigger. For example, the condition may be that the SMF network element obtains related information about bridge establishment or modification. For example, the SMF network element obtains the bridge information in step S501.

S502b. The PCF network element sends a policy authorization notification (PolicyAuthorization_Notify) message to an AF network element. Accordingly, the AF network element receives the policy authorization notification message from the PCF network element.

Optionally, the AF network element may be a TSN AF network element. Alternatively, the AF network element may be an AF network element used by a third party to access a TSC service and a time synchronization service. In this case, the AF network element may interact with a TSCTSF network element. For example, the AF network element may be the AF network element in the architecture shown in FIG. 3.

Optionally, when the AF network element is a TSN AF network element, if the TSN AF network element cannot directly interact with the PCF because the TSN AF network element is untrusted or due to another reason (for example, deployment or an operator configuration policy), the PCF network element interacts with the TSN AF network element via a NEF network element. That is, in this case, a NEF network element exists between the PCF network element and the AF network element in FIG. 5.

Optionally, when the AF network element is used by the third party to access the TSC service and the time synchronization service, interaction between the PCF network element and the AF network element needs to be performed via the TSCTSF network element. When the AF network element is untrusted, interaction needs to be performed via a NEF network element. That is, an information transmission path between the PCF network element and the AF network element is: PCF network element-TSCTSF network element -NEF network element (optional)-AF network element. That is, in this case, a TSCTSF network element exists between the PCF network element and the AF network element in FIG. 5, and further, there may further be a NEF network element.

Optionally, the policy authorization notification message is for notifying the AF network element of the bridge establishment or modification. For example, the policy authorization notification message may include the foregoing bridge information.

Optionally, the policy authorization notification message may be transmitted by using a preconfigured AF session. The AF session is a session between the PCF network element and the AF network element. That is, the AF session is to be established between the PCF network element and the AF network element.

S502c. Perform a policy authorization creation (PolicyAuthorization_Create) procedure.

Optionally, the AF network element may learn of the bridge information through step S502c. If the bridge has no corresponding AF session, for example, the bridge is a newly established bridge, the AF network element may establish the AF session for the bridge.

For example, the AF network element may send a policy authorization creation request message to the PCF network element, to request to create an AF session associated with the MAC address of the DS-TT port. After receiving the policy authorization creation request message, the PCF network element may send a policy authorization creation response message to the AF network element.

Optionally, if the bridge has had a corresponding AF session, for example, the bridge is not a newly established bridge, the operation of newly establishing the AF session in step S502c may not be performed.

S502d. Perform a policy authorization subscription (Policy Authorization_Subscribe) procedure.

Optionally, the AF network element may send a policy authorization subscription request message to the PCF network element by using the newly established AF session in step S502c or the existing AF session. The policy authorization subscription request message may be for requesting to subscribe to a change of the PMIC and/or a change of a user plane node management information container (user plane node management information container, UMIC).

S503. The AF network element obtains a transmission delay and a traffic class table via the DS-TT and the NW-TT (AF retrieves txpropagation Delay and Traffic Class table from DS-TT and NW-TT).

Optionally, the transmission delay may be a transmission delay on the DS-TT port/an NW-TT port, and is for determining a transmission delay between the DS-TT/NW-TT port and a port of another device (for example, a common TSN bridge or a TSN terminal). The traffic class table is for mapping data packets with different priorities to different service types.

S504. The AF network element sends neighbor discovery configurations to the NW-TT or the DS-TT, and subscribes to receiving neighbor discovery information for each discovered neighbor of the NW-TT and neighbor discovery information for each discovered neighbor of the DS-TT.

A neighbor of the NW-TT may alternatively be understood as a neighbor port of the NW-TT port. A neighbor of the DS-TT may alternatively be understood as a neighbor port of the DS-TT port. Neighbor discovery of the NW-TT may alternatively be understood as neighbor port discovery of the NW-TT port, and neighbor discovery of the DS-TT may alternatively be understood as neighbor port discovery of the DS-TT port.

Optionally, the NW-TT may support a link layer discovery protocol (link layer discovery protocol, LLDP), so that the AF network element sends the neighbor discovery configurations to the NW-TT, to activate an LLDP agent in the NW-TT to perform neighbor discovery. In addition, the AF network element may further subscribe to receiving the neighbor discovery information for each discovered neighbor of the NW-TT.

Optionally, the DS-TT may support or not support the LLDP. When the DS-TT does not support the LLDP, the AF network element further sends a DS-TT port neighbor discovery configuration to the NW-TT, to configure and activate the LLDP agent in the NW-TT to perform neighbor discovery on behalf of the DS-TT. In addition, the AF network element may further subscribe to receiving the neighbor discovery information for each discovered neighbor of the DS-TT from the NW-TT.

Alternatively, when the DS-TT supports the LLDP, the AF network element further sends a DS-TT port neighbor discovery configuration to the DS-TT, to activate an LLDP agent in the DS-TT to perform neighbor discovery. In addition, the AF network element may further subscribe to receiving the neighbor discovery information for each discovered neighbor of the DS-TT.

Optionally, the AF network element may learn, based on a port management capability, whether the DS-TT supports the LLDP. The port management capability may be carried in the policy authorization notification message in step S502b.

S505. The AF network element receives notifications related to neighbors of the NW-TT and the DS-TT.

Optionally, step S505 may alternatively be understood as that the AF network element receives neighbor discovery information of the NW-TT and neighbor discovery information of the DS-TT.

Optionally, the neighbor discovery information of the NW-TT and the neighbor discovery information of the DS-TT may be for determining a network topology of TSN.

S506. The AF network element reports or updates the bridge information to a TSN control plane (control plane, CP).

Optionally, the AF network element may send a message to a TSN CNC, to report or update the bridge information. For example, the message may include information that is related to the bridge and that is learned of in the foregoing steps S501 to S505.

### 4. Bridge configuration:

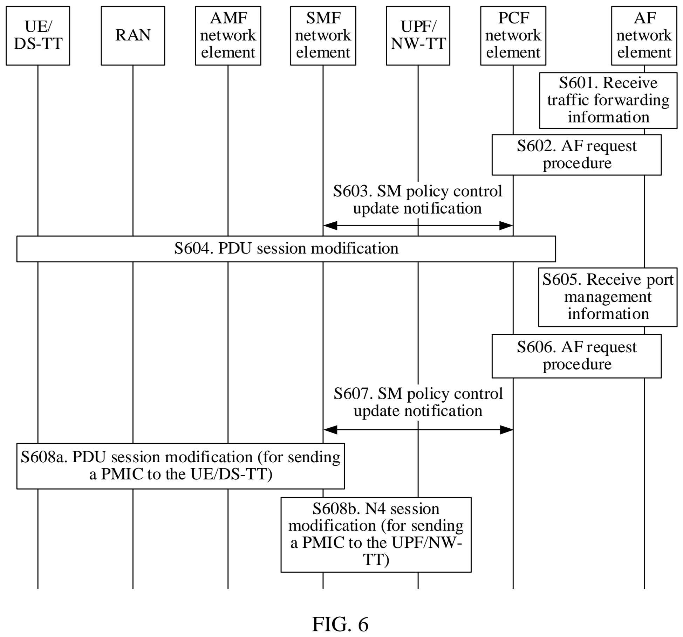

For example, a bridge configuration procedure may be shown in FIG. 6. Refer to FIG. 6. The bridge configuration procedure includes the following steps.

S601. An AF network element receives traffic forwarding information (traffic forwarding information).

For the AF network element, refer to the related descriptions in step S502b. Details are not described herein again. For example, when the AF network element is a TSN AF network element or the AF network element is used by a third party to access a TSC service and a time synchronization service, the AF network element may receive the traffic forwarding information from a TSN CNC. Alternatively, when the AF network element is used by a third party to access a TSC service and a time synchronization service, the AF network element may receive the traffic forwarding information from the third party (for example, a TSC service demander).

Optionally, the traffic forwarding information may indicate a transmission requirement of a data flow of the TSC service. For example, the data flow of the TSC service may also be referred to as a TSC flow. In a TSN network, the TCS flow may be a TSN flow or a TSN data flow.

S602. Perform an AF request procedure.

Optionally, in step S602, the AF network element may send an AF request message to a PCF network element based on the traffic forwarding information. The AF request message may include at least one of TSN QoS information (TSN QoS information) of the TSC service, a TSC assistance container (TSC Assistance Container), and a service data flow filter (Service Data Flow Filter).

S603. Transmit an SM policy control update notification (SMPolicyControl_UpdateNotify).

Optionally, after receiving the AF request message, the PCF network element may determine (or update) a PCC rule based on the AF request message. For example, the PCF network element maps the TSN QoS information into a 5GS QoS policy, and includes the 5GS QoS policy, the TSC assistance container, and the like in the PCC rule.

Optionally, after determining (or updating) the PCC rule, the PCF network element may send an SM policy control update notification message to an SMF network element, where the message may include the foregoing PCC rule.

Optionally, after receiving the SM policy control update notification message, the SMF network element may determine time-sensitive communication assistance information (time-sensitive communication assistance information, TSCAI), and send the TSCAI to an access network device. For example, the TSCAI includes one or more parameters shown in Table 1.

**Table 1**

| Parameter | Description |
|---|---|
| Flow direction | TSC flow direction (including an uplink direction or a downlink direction). |
| Periodicity | Time period between two data bursts |
| Burst arrival time | Latest possible time point at which a 1^{st} data packet of a data burst arrives at an ingress of a RAN (for the downlink flow direction) or an egress of a UE (for an uplink flow direction) |
| Survival time | Duration for which an application can survive without any data burst |

S604. Perform PDU session modification.

Optionally, after receiving the SM policy control update notification message, the SMF network element may determine, based on the SM policy control update notification message, that the PCF network element updates the PCC rule, thereby triggering a PDU session modification process, to modify a QoS flow of a PDU session to transmit the data flow of the TSC service.

It may be understood that, when the data flow of the TSC service is transmitted through the QoS flow of the PDU session, traffic statistics collection performed by the SMF network element by using a UPF network element, a flow direction, quota management, and the like are the same as those of a common data flow. A difference lies in that transmission of the data flow of the TSC service is sensitive to a delay, jitter, and the like, and a 5GS may reserve a network resource based on a demand, provide a QoS guarantee for establishing a bridge for TSC flow transmission, to satisfy a delay sensitive requirement and a jitter sensitive requirement.

S605. The AF network element receives port management information.

Optionally, the port management information may include information related to a DS-TT port and/or an NW-TT port. For a sender of the port management information, refer to the related descriptions of the sender of the traffic forwarding information in step S601. Details are not described herein again.

S606. Perform an AF request procedure.

Optionally, in step S606, the AF network element may send an AF request message to the PCF network element based on the port management information. The AF request message may include a PMIC, TSN QoS information, and the like. For example, the PMIC includes the port management information, and the TSN QoS information may include at least one of a priority, a delay, a maximum TSC burst size, and a maximum traffic bit rate.

S607. Transmit an SM policy control update notification (SMPolicyControl_UpdateNotify).

Optionally, after receiving the AF request message, the PCF network element may send an SM policy control update notification message to the SMF network element based on the AF request message. For example, the SM policy control update notification message may include a PCC rule, and the PCC rule may include a 5G QoS policy, the TSCAI, and the like. In addition, the SM policy control update notification message may further include the PMIC and a port number that are transparently transmitted by the PCF network element.

Optionally, after the SMF network element receives the SM policy control update notification message, if the port number includes a port number of the DS-TT port, the SMF network element may perform the following step S608a; or if the port number includes a port number of the NW-TT port, the SMF network element may perform the following step S608b.

S608a. The SMF network element sends the PMIC to the UE/a DS-TT via a PDU session modification request message.

S608b. The SMF network element sends the PMIC to the UPF/an NW-TT via an N4 session modification request message.

Optionally, the SMF network element further provides the UPF/NW-TT with an Ethernet data packet filter as a part of an N4 data packet detection rule.

### 5. Port status subscription and reporting:

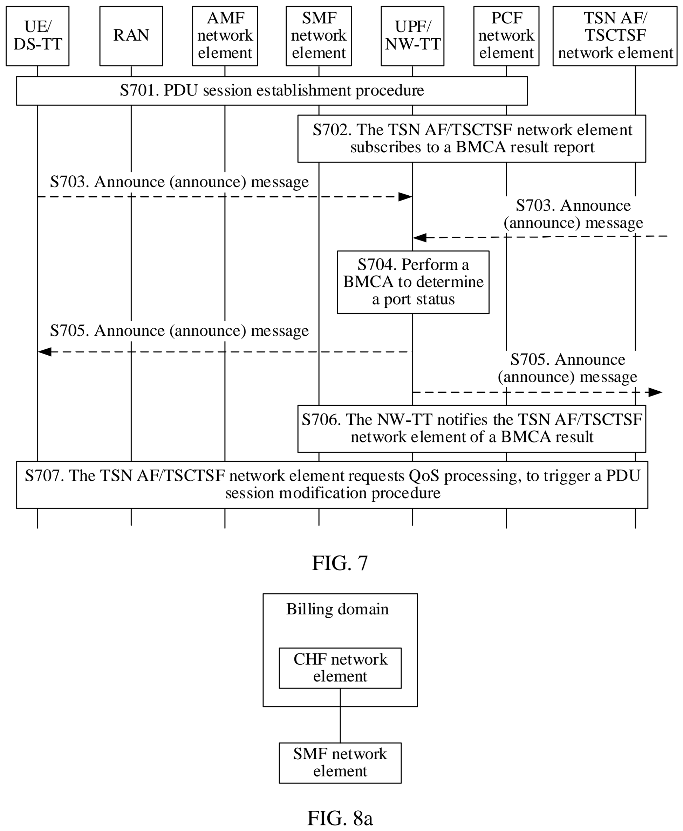

For example, a port status subscription and reporting procedure may be shown in FIG. 7. Refer to FIG. 7. The procedure includes the following steps.

S701. Perform a PDU session establishment procedure.

S702. A TSN AF/TSCTSF network element subscribes to a best master clock algorithm (best master clock algorithm, BMCA) result report.

S703. A UPF receives an announce message of a DS-TT or an NW-TT via the NW-TT.

Optionally, the announce message is for determining a best master clock. For example, the announce message includes information such as a best-clock priority, a time grade, and time precision.

S704. The NW-TT performs a BMCA based on the received announce message, and determines a port status of a DS-TT port and a port status of an NW-TT port.

Optionally, a precision time protocol (precision time protocol, PTP) or a generalized precision time protocol (generalized precision time protocol, gPTP) may be run on the DS-TT port and the NW-TT port. Therefore, the DS-TT port and the NW-TT port may alternatively be understood as PTP ports.

Optionally, the port status may indicate a clock of the port, whether the port is a port that issues a synchronization time point, whether the port is a port that receives the synchronization time point, whether the port is a port that neither receives the synchronization time point nor issues the synchronization time point, and the like. The port status may be for clock synchronization.

S705. The UPF/NW-TT sends an announce message to the DS-TT or the NW-TT. Optionally, the Announce message may include a BMCA result or updated port status information.

S706. The UPF/NW-TT notifies the TSN AF/TSCTSF network element of the BMCA result.

Optionally, the BMCA result indicates the port status or a port status change of the DS-TT port and the port status or a port status change of the NW-TT port. In addition, the UPF/NW-TT may further maintain the port status of the DS-TT port and the port status of the NW-TT port.

S707. The TSN AF/TSCTSF network element requests QoS processing, to trigger a PDU session modification procedure.

Optionally, the port statuses or the port status changes indicated by the BMCA result may cause a QoS change. Therefore, the TSN AF/TSCTSF network element may request the QoS processing, and a demand of the QoS processing is to trigger PDU session modification.

It should be noted that the foregoing descriptions are merely brief descriptions of the procedures shown in FIG. 5 to FIG. 7. For detailed implementation, refer to related descriptions in the 3GPP and IEEE standards. However, in this application, a method provided in embodiments of this application is not limited to being applicable only to the procedures in FIG. 5 to FIG. 7 described in the current standards. The method provided in embodiments of this application is applicable to all of details, variations, and the like of the procedures shown in FIG. 5 to FIG. 7 in a subsequent standard.

### 6. 5GS charging:

Currently, charging in a 5GS may be classified into charging per PDU session and charging per application programming interface (application programming interface, API) invocation or notification.

Optionally, in the charging per PDU session, as shown in FIG. 8a, charging processing is performed through interaction between an SMF network element and a charging function (charging function, CHF) network element.

For example, charging interaction is performed between the SMF network element and the CHF network element per PDU session. PDU sessions of UEs are independent of each other, and each of charging resource creation and charging processing (for example, online charging processing and offline charging processing) that correspond to the PDU sessions is an independent operation, and do not interfere with each other.

In the charging per PDU session, the SMF network element may send a request to the CHF network element, to create a charging session. In response to the request, the CHF network element sends a charging parameter, for example, a charging trigger (trigger) event configuration or a quota, to the SMF network element. The SMF network element may determine a usage request and a usage reporting rule based on the charging parameter or a charging policy (which may be from the CHF network element or a PCF network element), and deliver the usage reporting rule to a UPF network element. The UPF network element may report traffic (to the SMF network element) according to the usage reporting rule. Subsequently, the SMF network element applies for usage and reports charging information to the CHF network element based on a charging trigger event, so that the CHF network element performs charging processing.

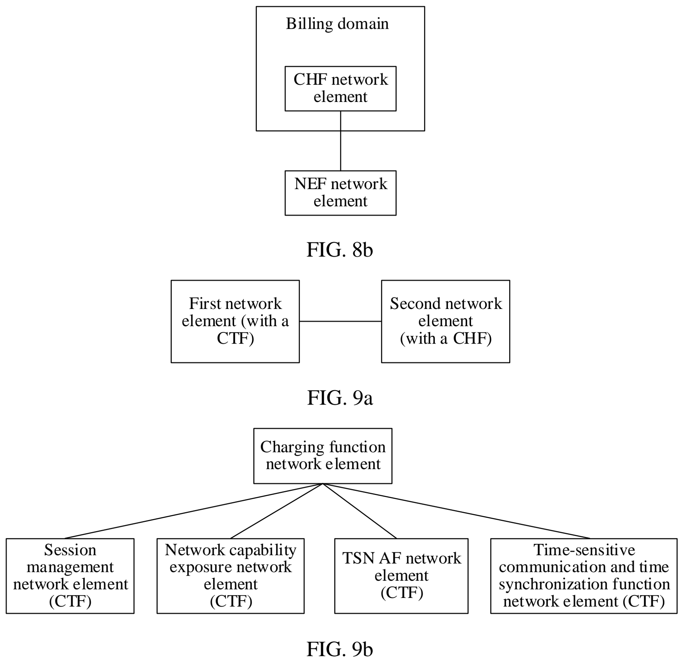

Optionally, in the charging per API invocation or notification, as shown in FIG. 8b, charging processing is performed through interaction between a NEF network element and a CHF network element.

For example, charging interaction is performed between the NEF network element and the CHF network element per API. All API operations are independent of each other, and charging is performed based on an event charging mode. The event charging mode may include immediate event charging (immediate event charging, IEC), post event charging (post event charging, PEC), event charging with unit reservation (event charging with unit reservation, ECUR), and the like.

As described above, 5GS charging is currently performed on the UE based on the usage (for example, traffic or duration) or an event. However, a 5GS bridge provides a network capability for TSN or a third party. Therefore, in a scenario in which a 5GS is used as the 5GS bridge, an operator may need to charge a TSN network for management and configuration of the 5GS bridge and TSC service transmission, need to charge the third party for TSC service transmission, or need to charge the third party for providing a TSC service and a time synchronization service. That is, a charging demand and a charging object of a conventional 5GS are different from those of the 5GS used as the 5GS bridge. Therefore, a charging mechanism of the conventional 5GS cannot be used in the scenario in which the 5GS is used as the 5GS bridge.

Based on this, this application provides a charging method, so that in a scenario in which a mobile communication system provides a bridge, a user of the bridge can be charged when the bridge or a service provided by the bridge is used, to enable effective implementation of a service that needs to use the bridge.

It should be noted that the mobile communication system in embodiments of this application may also be referred to as an operator network, and the mobile communication system and the operator network may be mutually replaced.

The mobile communication system may be a 5GS, another mobile communication system like a 4th generation (4th generation, 4G) long term evolution (long term evolution, LTE) system, or a future evolved public land mobile network (public land mobile network, PLMN) like a 6th generation (6th generation, 6G) mobile communication system.

The charging method provided in embodiments of the present invention may be applied to a communication system shown in FIG. 9a. As shown in FIG. 9a, the communication system includes at least one first network element and a second network element (in FIG. 9a, only one first network element is used as an example for description). The first network element has a charging trigger function (charging trigger function, CTF), or in other words, the CTF is deployed on the first network element. The second network element has a charging function (charging function, CHF), or in other words, the CHF is deployed on the second network element. In the following embodiments of this application, the second network element is referred to as a charging function network element.

In a possible implementation, the first network element is mainly configured to: initiate charging, collect charging information, and request usage from the charging function network element and/or report charging information to the charging function network element.

In embodiments of the present invention, as shown in FIG. 9b, the at least one first network element may include at least one of the following: a session management network element, a network capability exposure network element, an application function network element, or a time-sensitive communication and time synchronization function network element.

Optionally, in addition to the foregoing charging-related function, the session management network element may be further configured to perform session management, tunnel maintenance, IP address allocation and management, policy implementation, QoS control, and the like. For example, in a 5G mobile communication system, the session management network element may be an SMF network element. In a future mobile communication system like a 6G mobile communication system, the session management network element may still be an SMF network element, or may have another name. This is not specifically limited in this application.

Optionally, in addition to the foregoing charging-related function, the network capability exposure network element further supports exposure of a network capability to the outside, and is configured to expose the network capability to a third-party application, to implement friendly interconnection between the network capability and a service demand. For example, in a 5G mobile communication system, the network capability exposure network element may be a NEF network element. In a future mobile communication system like a 6G mobile communication system, the network capability exposure network element may still be a NEF network element, or may have another name. This is not specifically limited in this application.

Optionally, the application function network element may be an application function network element of a third-party network. The third-party network may be, for example, a TSN network. In this scenario, the application function network element may be a TSN-dedicated application function network element, for example, may be a TSN AF network element. The TSN AF network element may be deployed by an operator. In this case, the TSN AF network element may directly interact with another network function (network function, NF) of the operator. Alternatively, the TSN AF network element needs to access an NF of an operator via the network capability exposure network element. That is, the TSN AF network element cannot directly interact with the NF of the operator. The TSN AF network element cannot directly interact with the NF of the operator possibly because the TSN AF network element is not trusted by the operator, or because of a configuration policy of the operator, or the like.

Alternatively, the third-party network may be, for example, another network that needs to use a bridge provided by an operator network. In this scenario, the application function network element may alternatively not be TSN-dedicated, for example, may be the AF network element in the architecture shown in FIG. 3. In this scenario, the application function network element may directly interact with an NF of an operator (for example, the application function network element is trusted by the operator), or need to access an NF of an operator via the network capability exposure network element (for example, the application function network element is not trusted by the operator).

Optionally, in addition to the foregoing charging-related function, the time-sensitive communication and time synchronization function network element further supports related processing such as a time-sensitive service, a time synchronization service, and bridge management. For example, in a 5G mobile communication system, the time-sensitive communication and time synchronization function network element may be a TSCTSF network element. In a future mobile communication system like a 6G mobile communication system, the time-sensitive communication and time synchronization function network element may still be a TSCTSF network element, or may have another name. This is not specifically limited in this application.

In a possible implementation, the charging function network element is configured to perform charging processing, for example, is responsible for generating a charging data record (charging data record, CDR) and sending the CDR to a billing domain (Billing Domain). In addition, the charging function network element may further perform charging-related configuration, for example, perform quota management and configure a charging trigger event.

Optionally, the charging function network element may not distinguish between charging objects, that is, may be responsible for charging various charging objects. Alternatively, the charging function network element may distinguish between charging objects. That is, the charging function network element is responsible for charging a specific type of charging object, for example, is responsible for charging a consumer user, or is responsible for charging an industry user. For example, the consumer user may be understood as an individual user, and the industry user may be a company or an organization. For example, the industry user may be a TSN service provider.

Optionally, when the charging function network element is responsible for charging the consumer user, the charging function network element may be referred to as a UE charging function network element. When the charging function network element is responsible for charging the industry subscriber, the charging function network element may be referred to as an industry user charging function network element. For example, when the charging function network element is responsible for charging a TCS service provider, the charging function network element may be referred to as a TSC charging function network element.

Optionally, the charging function network element may be a charging function network element in a central deployment architecture or a charging function network element in a distributed deployment architecture. This is not specifically limited in this application. For example, the centralized deployment architecture includes a central charging function network element and distributed edge charging function network elements, and the distributed edge charging function network elements interact with the central charging function network element. The distributed deployment architecture does not include a central charging function network element, and the distributed edge charging function network elements may interact with each other.

Optionally, in addition to the first network element and the charging function network element, the communication system may further include at least one of the following: a mobility management network element, a user plane network element, a policy control network element, or a terminal device.

Optionally, the mobility management network element is mainly for attachment, mobility management, and a tracking area update procedure of a terminal in a mobile network. The mobility management network element terminates a non-access stratum (non-access stratum, NAS) message, completes registration management, connection management, reachability management, tracking area list (tracking area list, TA list) allocation, mobility management, and the like, and transparently routes an SM message to the session management network element. For example, in a 5G communication system, the mobility management network element may be an AMF network element. In a future mobile communication system like a 6G mobile communication system, the mobility management network element may still be an AMF network element, or have another name. This is not limited in embodiments of this application.

Optionally, the user plane network element is mainly responsible for processing a user packet, such as forwarding and charging a user packet. For example, in a 5G mobile communication system, the user plane network element may be a UPF network element. In a future mobile communication system like a 6G mobile communication system, the user plane network element may still be a UPF network element, or may have another name. This is not specifically limited in this application.

Optionally, in a scenario in which the mobile communication system is used as the bridge, the user plane network element may include a network-side translator, or in other words, the network-side translator may be integrated into the user plane network element. The network-side translator can provide an input port and an output port for the bridge. For example, the network-side translator may be an NW-TT.

Optionally, the policy control network element may support a user subscription data management function, a policy control function, a charging policy control function, QoS control, and the like, and is configured to: provide a unified policy framework for governing network behavior, provide policy rule information for a control plane function network element (for example, an AMF network element), and so on. For example, in a 5G communication system, the policy control network element may be a PCF network element. In a future mobile communication system like a 6G mobile communication system, the policy control function network element may still be a PCF network element, or have another name. This is not limited in embodiments of this application.

Optionally, in a scenario in which the mobile communication system provides the bridge, the terminal device may include a UE and a device-side translator in the mobile communication system. The device-side translator can provide an input port and an output port for the bridge. For example, the device-side translator may be a DS-TT.

For example, the UE and the device-side translator may be integrated into one entity. That is, the terminal device may be one entity. Alternatively, the UE and the device-side translator may be independently deployed in different entities. That is, the terminal device may include a plurality of entities.

Optionally, the technical solutions in embodiments of this application may be applied to various communication systems. The communication system may be a 3GPP communication system, for example, a 5G or 6G mobile communication system. In this case, a diagram of a possible network architecture that corresponds to the communication system shown in FIG. 9a or FIG. 9b and to which embodiments of this application are applicable may be shown in FIG. 2 or FIG. 3.

It may be understood that the communication system and the service scenario described in the foregoing embodiments of the present invention are intended to describe the technical solutions in embodiments of the present invention more clearly, and impose no limitation on the technical solutions provided in embodiments of the present invention. A person of ordinary skill in the art may know that, with the evolution of the network architecture and emergence of a new service scenario, the technical solutions provided in embodiments of the present invention are also applicable to a similar technical problem.

Related functions of the network elements or the devices, for example, the first network element and the charging function network element, in the foregoing communication system may be implemented by one device, may be jointly implemented by a plurality of devices, may be implemented by one or more functional modules in one device, may be one or more chips, or may be a system on chip (system on chip, SoC) or a chip system. The chip system may include a chip, or may include a chip and another discrete component. This is not specifically limited in embodiments of this application.

It may be understood that the foregoing function may be a network element in a hardware device, a software function running on dedicated hardware, a combination of hardware and software, or a virtualization function instantiated on a platform (for example, a cloud platform).

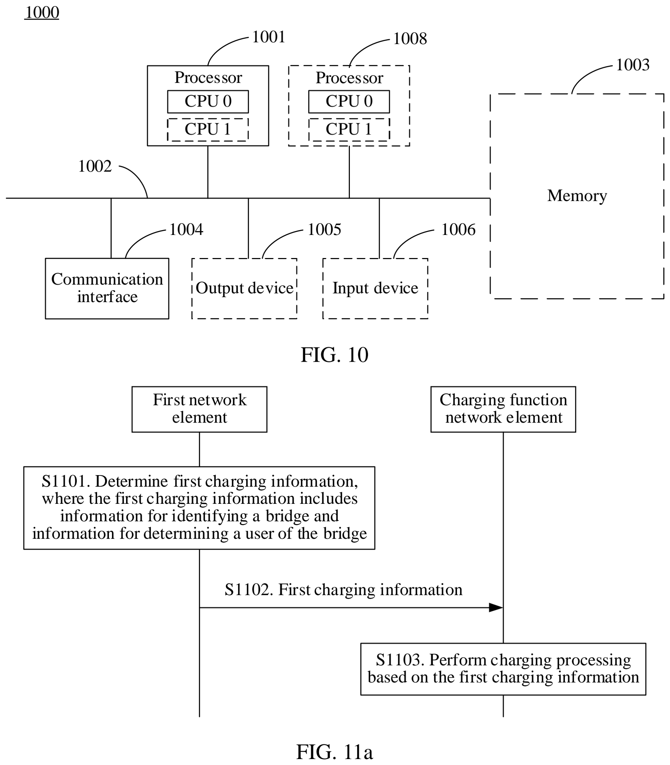

For example, the related functions of the first network element and the charging function network element may be implemented by using a communication device 1000 in FIG. 10. FIG. 10 is a diagram of a structure of a communication device 1000 according to an embodiment of this application. The communication device 1000 includes one or more processors 1001, a communication line 1002, and at least one communication interface (a communication interface 1004 and one processor 1001 are merely used as an example in FIG. 10 for description), and optionally may further include a memory 1003.

The processor 1001 may be a general-purpose central processing unit (central processing unit, CPU), a microprocessor, an application-specific integrated circuit (application-specific integrated circuit, ASIC), or one or more integrated circuits configured to control execution of a program in the solutions in this application.

The communication line 1002 may include a path for connecting different components.

The communication interface 1004 is configured to communicate with another device or a communication network. The communication interface 1004 may be an apparatus like a transceiver, or may be an input/output interface. Alternatively, the communication interface 1004 may be a transceiver circuit located in the processor 1001, and is configured to implement signal input and signal output of the processor.

The memory 1003 may be an apparatus with a storage function. For example, the memory 1003 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a magnetic disk storage medium or another magnetic storage device, or any other medium that can be for carrying or storing expected program code in a form of instructions or a data structure and that can be accessed by a computer, but is not limited thereto. The memory may exist independently, and is connected to the processor through the communication line 1002. The memory may alternatively be integrated with the processor.

The memory 1003 is configured to store computer-executable instructions for executing the solutions in this application, and the processor 1001 controls the execution. The processor 1001 is configured to execute the computer-executable instructions stored in the memory 1003, to implement charging provided in embodiments of this application.

Alternatively, optionally, in embodiment of this application, the processor 1001 may implement a processing-related function in the charging methods provided in the following embodiments of this application, and the communication interface 1004 may be responsible for communicating with the another device or the communication network. This is not specifically limited in embodiments of this application.

Optionally, the computer-executable instructions in embodiments of this application may also be referred to as application program code. This is not specifically limited in embodiments of this application.

During specific implementation, in an embodiment, the processor 1001 may include one or more CPUs such as a CPU 0 and a CPU 1 in FIG. 10.

During specific implementation, in an embodiment, the communication device 1000 may include a plurality of processors such as the processor 1001 and a processor 1008 in FIG. 10. Each of these processors may be a single-core (single-core) processor, or may be a multi-core (multi-core) processor. The processor herein may include but is not limited to at least one of the following: various computing devices that run software, such as a central processing unit (central processing unit, CPU), a microprocessor, a digital signal processor (DSP), a microcontroller unit (microcontroller unit, MCU), or an artificial intelligence processor. Each type of computing device may include one or more cores for executing software instructions to perform an operation or processing.

During specific implementation, in an embodiment, the communication device 1000 may further include an output device 1005 and an input device 1006. The output device 1005 communicates with the processor 1001, and may display information in a plurality of manners. For example, the output device 1005 may be a liquid crystal display (liquid crystal display, LCD), a light emitting diode (light emitting diode, LED) display device, a cathode ray tube (cathode ray tube, CRT) display device, or a projector (projector). The input device 1006 communicates with the processor 1001, and may receive an input from a user in a plurality of manners. For example, the input device 1006 may be a mouse, a keyboard, a touchscreen device, or a sensor device.

Sometimes, the communication device 1000 may also be referred to as a communication apparatus, and may be a general-purpose device or a dedicated device. For example, the communication device 1000 may be a desktop computer, a portable computer, a network server, a personal digital assistant (personal digital assistant, PDA), a mobile phone, a tablet computer, a wireless terminal device, an embedded device, the foregoing terminal, the foregoing network device, or a device having a structure similar to that in FIG. 10. A type of the communication device 1000 is not limited in embodiments of this application.

In addition, the composition structure shown in FIG. 10 does not constitute a limitation on the communication device. In addition to the parts shown in FIG. 10, the communication apparatus may include more or fewer parts than the parts shown in the figure, some parts may be combined, or there may be a different part layout.

With reference to the communication system shown in FIG. 9a or FIG. 9b, the following describes the charging method provided in embodiments of this application. It should be noted that the following embodiments are described by using an example in which a mobile communication system (for example, a 5GS) is used as a TSC bridge. Certainly, this application is also applicable to a scenario in which the mobile communication system is used as a bridge in another network having a delay-sensitive communication demand. This is not specifically limited in this application.

It should be noted that in the following embodiments of this application, a name of a message between network elements, a name of each parameter, a name of each piece of information, or the like is merely an example, and may be another name in another embodiment. This is not specifically limited in the method provided in this application.

It may be understood that, in embodiments of this application, each network element may perform some or all of the steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be necessarily performed.

FIG. 11a is a flowchart of a charging method according to an embodiment of this application. The method may be applied to a process in which at least one third-party network performs service control and/or data transmission via a bridge provided by an operator network. As shown in FIG. 11a, the method may include the following steps.

S1101. A first network element determines first charging information.

Optionally, in a process of establishing a data connection session from a terminal device to a network or after the establishment is completed, a first network element determines the first charging information for a user of the bridge.

It should be noted that, in embodiments of this application, unless otherwise specified, the bridge is the bridge provided by the operator network. For example, the bridge may be a bridge provided by the operator network for a TSN network, for example, a 5GS bridge. In addition, when the operator network provides TCS service transmission for a third party, the TCS service transmission may be implemented via the bridge.

The first charging information includes information for identifying the bridge and information for determining the user of the bridge. The bridge includes an NW-TT port and a DS-TT port. The NW-TT port and the DS-TT port are separately communicatively connected to a device of the third-party network. The NW-TT port is communicatively connected to the DS-TT port via a user plane network element and an access network device, or the NW-TT port is communicatively connected to the DS-TT port through a user plane tunnel.

Optionally, the information for identifying the bridge may be an identifier of the bridge and/or a user-plane node identifier. The user-plane node identifier may be an identifier of the user plane network element associated with the bridge.

Optionally, the user plane tunnel is for providing a user plane connection between the terminal device and a user plane network element. For example, in a 5GS, the user plane tunnel may be a PDU session (session), and the PDU session may be an IP type PDU session or an Ethernet type PDU session. In a future evolved PLMN, for example, a 6G mobile communication system, the user plane tunnel may also be a PDU session, or may be implemented in another form. This is not specifically limited in this application.

Optionally, the NW-TT port is provided by an NW-TT in the user plane network element. The DS-TT port is provided by a DS-TT in the terminal device.

For example, the terminal device may alternatively be understood as a terminal device associated with the bridge; the user plane network element may alternatively be understood as the user plane network element associated with the bridge; the NW-TT port may alternatively be understood as an NW-TT port associated with the bridge or the NW-TT port included in the bridge; the DS-TT port may alternatively be understood as a DS-TT port associated with the bridge or the DS-TT port included in the bridge; and the user plane tunnel may alternatively be understood as a user plane tunnel associated with the bridge.

In a possible implementation, the information for determining the user of the bridge includes at least one of the following: an identifier of an application function network element of the third-party network, a data network name (data network name, DNN), an identifier of a network slice used by the third-party network, an external group identifier (External Group ID) of the third-party network, or an internal group identifier (Internal Group ID) of the third-party network.

Optionally, a mobile communication system may provide a bridge management and configuration service and/or the TSC service transmission for the third-party network. For example, the third-party network may be the TSN network. Alternatively, the third-party network may be a network that needs to use a bridge provided by the mobile communication system. For example, the mobile communication system provides the TSC service transmission for the third-party network. For example, the mobile communication system provides the TSC service transmission for the third-party network via the bridge. Further, the mobile communication system further provides a time synchronization service for the third-party network. In this case, a charging object may be understood as the third party.

For example, the application function network element of the third-party network may be a TSN AF network element corresponding to the TSN network, or the application function network element of the third-party network may be an AF network element used by the third-party network to access a TSC service and/or a time synchronization service, for example, the AF network element in the architecture shown in FIG. 3.

For example, the DNN may be a name of a data network (data network, DN) corresponding to the third-party network.

For example, an operator may subscribe to the third-party network, to agree on using the network slice to provide a service for the third-party network, for example, providing the bridge by using the network slice. Therefore, the identifier of the network slice used by the third-party network is also used as the information for determining the user of the bridge.

For example, the slice identifier may be single network slice selection assistance information (single network slice selection assistance information, S-NSSAI). The S-NSSAI may include slice/service type (slice/service type, SST) information. The SST information is for describing expected network slice behavior, for example, is for describing a slice/service type of the network slice. Further, the S-NSSAI further includes slice differentiator (also referred to as a slice differentiation identifier) (slice differentiator, SD) information. The SD information is supplementary information of the SST information, and is for differentiating between different network slices with a same SST feature. In other words, when the SST information points to a plurality of network slices, the SD information may assist in corresponding to a unique network slice.

For example, for the external group identifier or the internal group identifier of the third-party network, the external and the internal are the external and the internal relative to the mobile communication system. When the application function network element of the third-party network cannot directly interact with a network element of an operator, the application function network element is an external network element. In this case, the third-party network or the application function network element in the third-party network may have the external group identifier. Accordingly, the internal group identity corresponding to the external group identity may be maintained inside the mobile communication system, and the internal group identity may be for identifying the third-party network or the application function network element of the third-party network inside the mobile communication system.

Optionally, when the application function network element of the third-party network cannot directly interact with the network element of the operator, the information for determining the user of the bridge may be the external group identifier and/or the internal group identifier of the third-party network.

In another possible implementation, the information for determining the user of the bridge may be a subscriber identifier (Susbscriber ID). For example, the subscriber may be understood as the user of the bridge. For example, when an application function network element is a TSN AF network element, the subscriber identifier may be provided by a CNC node in the TSN network. When an application function network element is an AF network element used by the third-party network to access a TSC service, the subscriber identifier may be provided by the AF network element.

Optionally, in addition to a first identifier and/or a second identifier, the first charging information may further include an identifier of the terminal device and/or an identifier of the user plane tunnel. For example, when the user plane tunnel is a PDU session, the identifier of the user plane tunnel is an identifier of the PDU session.

Optionally, the mobile communication system may provide a plurality of bridges. The descriptions of the bridge in embodiments of this application are applicable to each bridge provided by the mobile communication system.

S1102. The first network element sends the first charging information to a charging function network element. Accordingly, the charging function network element receives the first charging information from the first network element.

S1103. The charging function network element performs charging processing based on the first charging information.

Optionally, in addition to the first charging information, the first network element may further send other charging information to the charging function network element. That is, the first network element may send a plurality of pieces of charging information. The plurality of pieces of charging information may be sent under different conditions. In other words, the sending of the plurality of pieces of charging information may be triggered by different charging trigger (trigger) events. That is, the plurality of pieces of charging information may not be sent simultaneously.

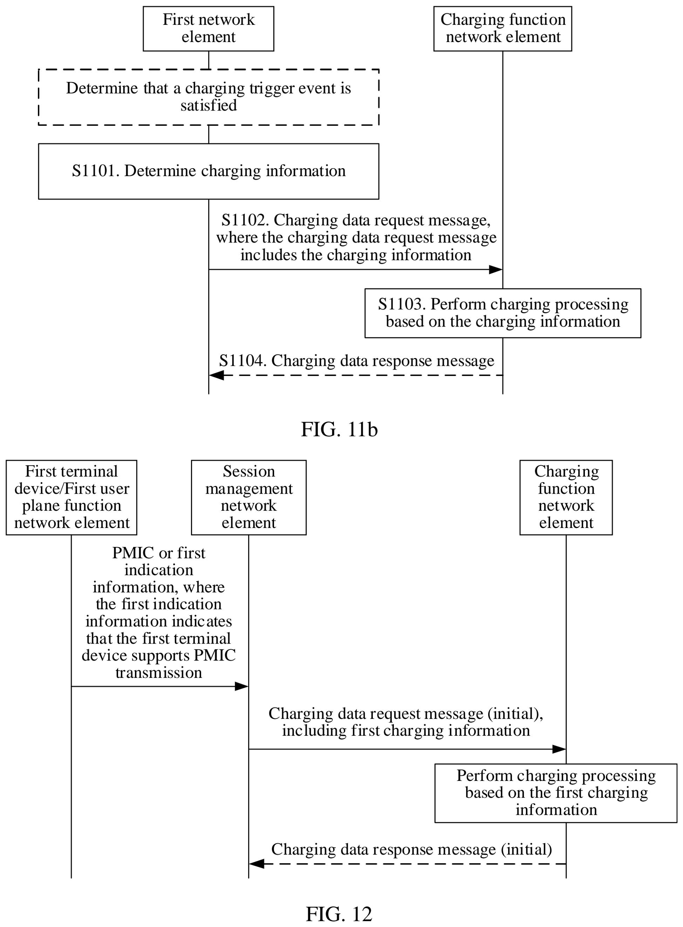

Optionally, as shown in FIG. 11b, before step S1102, the first network element may determine that a charging trigger event is satisfied (or occurs). A type of the charging trigger event may be immediate reporting or delayed reporting. When the type of the charging trigger event is the immediate reporting, the first network element stops recording charging information (where the charging information in this case may be understood as charging information determined by the first network element), and sends the charging information to the charging function network element. When the type of the charging trigger event is the delayed reporting, the first network element stops recording charging information (where the charging information in this case may be understood as charging information determined by the first network element), temporarily stores the charging information, and starts to record new charging information. The temporarily stored charging information is sent to the charging function network element when a next charging trigger event whose type is the immediate reporting is satisfied (or occurs).

Optionally, based on the type of the charging trigger event, when the charging trigger event is satisfied or occurs, sending the charging information may be understood as: When the charging trigger event is satisfied or occurs, sending the charging information immediately (where the type of the charging trigger event is the immediate reporting) or delaying (where the type of the charging trigger event is the delayed reporting) sending the charging information.

Optionally, as shown in FIG. 11b, that the first network element sends the charging information to the charging function network element may include: The first network element sends a charging data request (charging data request) message to the charging function network element, where the charging data request message includes the charging information. In FIG. 11b, one piece of charging information is used as an example for description.

Optionally, when the first network element sends a plurality of pieces of charging information, the plurality of pieces of charging information may be carried in different charging data request messages.

Optionally, when the first network element sends a plurality of pieces of charging information, the plurality of pieces of charging information each may include the information for identifying the bridge and the information for determining the user of the bridge. For ease of description, in the following embodiments of this application, the information for identifying the bridge is referred to as the first identifier, and the information for determining the user of the bridge is referred to as the second identifier. Certainly, the information for identifying the bridge and the information for determining the user of the bridge may have other names. This is not specifically limited in this application.

Optionally, the charging function network element may associate pieces of charging information by using the first identifier in the pieces of charging information, aggregate parameters in the pieces of charging information (referred to as charging aggregation or charging association), and perform charging per bridge (per bridge) based on aggregated information.

Alternatively, the charging function network element may associate pieces of charging information by using the first identifier and the second identifier, to separately charge for each bridge used by the user of the bridge. When the user of bridge is the TSN network, charging per TSN network bridge (per TSN (or TSN AF) + per bridge) is implemented. Alternatively, the charging function may associate pieces of charging information by using the second identifier, to implement aggregated charging on the user of the bridge. When the charging object is the TSN network, the TSN network is charged. That is, charging per TSN network (per TSN) is implemented.

Alternatively, the charging function network element may associate pieces of charging information by using at least one of the first identifier, the second identifier, the identifier of the terminal device, and the identifier of the user plane tunnel in the pieces of charging information, to implement charging at a plurality of granularities.

For example, the charging function network element may associate the pieces of charging information by using the first identifier and the identifier of the terminal device in the pieces of charging information, to implement charging per bridge and per terminal device (that is, per UE + per bridge). Alternatively, the charging function network element may associate the pieces of charging information by using the first identifier and the identifier of the user plane tunnel in the pieces of charging information, to implement charging per bridge and per user plane tunnel. Alternatively, the charging function network element may associate the pieces of charging information by using the first identifier, the identifier of the terminal device, and the identifier of the user plane tunnel in the pieces of charging information, to implement charging per bridge, per user plane tunnel, and per terminal device.

For example, the terminal device may be understood as a consumer user. The user of the bridge may be understood as an industry user. That is, the charging function network element may charge the consumer user or the industry user based on the charging information.

Optionally, after step S1103, the charging method provided in this embodiment of this application may further include the following step S1104.

S1104. The charging function network element sends a charging data response (charging data response) message to the first network element. Accordingly, the first network element receives the charging data response message from the charging function network element.

Optionally, the charging function network element may reply to the first network element with a corresponding charging data response message for each received charging data request message.

Based on this solution, the charging information sent by the first network element to the charging function network element includes the information for identifying the bridge and the information for determining the user of the bridge, so that the user of the bridge, namely, the third-party network, can be charged for using the bridge provided by the operator network. In this way, implementation of a service that needs to use the bridge can be promoted, or the TSN network can be promoted to use more services via the bridge provided by the operator network. For example, industrial control services that need to use the bridge (for example, a service of controlling a surgery robot of a third network by a doctor control server of the third-party network via the bridge, a service of controlling a terminal unit by a smart grid server via the bridge, a service of interaction between an AR/VR server and an AR/VR terminal via the bridge, interconnection and interworking between workshops inside a factory, and interconnection and interworking between an intranet of the factory and an intranet of an enterprise outside the factory) are enabled to be effectively implemented. In addition, a service that needs to use the bridge for data transmission (for example, a service of data transmission between different networks that belong to a same bridge user) can be enabled to be effectively implemented.

With reference to FIG. 11a and FIG. 11b, the foregoing describes an overall procedure of the charging method provided in this embodiment of this application. The following describes the charging method in detail by using an example in which the first network element is a session management network element, or in other words, the session management network element supports (or is deployed with) a charging trigger function.

In a first possible implementation, when the first network element is a session management network element, the session management network element may determine or send the first charging information when detecting that the bridge is available.

For example, that the session management network element detects that the bridge is available includes: The session management network element receives PMIC-related information from the terminal device or the user plane network element. For example, the session management network element receives a PMIC from the terminal device or the user plane network element, or receives first indication information from the terminal device, where the first indication information indicates that the terminal device supports PMIC transmission. In other words, as shown in FIG. 12, when receiving the PMIC or the first indication information, the session management network element sends the first charging information to the charging function network element.

For example, the PMIC-related information may be sent by a first terminal device or user plane network element to the session management network element in the PDU session establishment process in the procedure shown in FIG. 5.

Alternatively, that the session management network element detects that the bridge is available includes: The session management network element receives information about the bridge. That is, the method may further include: receiving the information about the bridge. The information about the bridge includes information about the NW-TT port and/or information about the DS-TT port. Further, the information about the bridge may further include at least one of the following: an IP address of the terminal device, UE-DS-TT residence time of the terminal device, information about the user plane tunnel (for example, the identifier of the PDU session), and information about the terminal device (for example, the identifier of the terminal device). The information about the DS-TT port may include a port number of the DS-TT port and/or a MAC address of the DS-TT port. The information about the NW-TT port may include a port number of the NW-TT port and/or a MAC address of the NW-TT port.

Optionally, that the session management network element detects that the bridge is available may alternatively be understood as a first charging trigger (trigger) event. That is, the session management network element may send the first charging information to the charging function network element when the first charging trigger (trigger) event is satisfied or occurs. For example, the first charging trigger (trigger) event may also be referred to as a first condition or a first charging trigger.

Optionally, a default type of the first charging trigger event may be the immediate reporting. In this case, the session management network element immediately sends the first charging information to the charging function network element when detecting that the bridge is available.

It should be noted that "immediate sending" in embodiments of this application means that current charging information can be sent without waiting for the next charging trigger event whose type is the immediate reporting to be satisfied or occur.

Optionally, in the first possible implementation, in addition to the first identifier and the second identifier, the first charging information may further include at least one of the following: at least one quota request, the port number of the DS-TT port, the MAC address of the DS-TT port, the port number of the NW-TT port, the MAC address of the NW-TT port, the IP address of the terminal device, the UE-DS-TT residence time, the information about the user plane tunnel (for example, the identifier of the PDU session), and the information about the terminal device (for example, the identifier of the terminal device).

Optionally, that the session management network element sends the first charging information to the charging function network element includes: The session management network element sends a first message to the charging function network element, where the first message includes the first charging information. The first message is for requesting to create a charging session or a charging service of the bridge. For example, the first message is a charging data request (charging data request) message (initial (initial)), and is also referred to as an initial charging data request message. After receiving the first message, the charging function network element may send a response message for the first message to the session management network element, where the response message for the first message may indicate that establishment of the charging session or the charging service of the bridge is completed. For example, the response message for the first message may be a charging data response (charging data response) message (initial (initial)), and is also referred to as an initial charging data response message.

Optionally, the first message may further include a charging trigger event (namely, the first charging trigger event) that triggers this time of charging information reporting. For example, the first charging trigger event may be understood as a part of parameters of the first charging information, or may be understood as a parallel parameter at a same level as the first charging information.

Optionally, after receiving the first charging information, the charging function network element may establish a charging resource and allocate a charging identifier (charging ID) based on the first identifier in the first charging information. In addition, the charging function network element may further open a CDR, to store the first charging information. The charging identifier may be sent to the first network element via the response message for the first message.

Optionally, after receiving the first message, the charging function network element may update a type of the first charging trigger event, may disable the first charging trigger event, or may enable another charging trigger event. Accordingly, the response message for the first message may indicate results of these operations. For example, the response message for the first message may indicate an updated type of the first charging trigger event, or the newly enabled or disabled charging trigger event.

Optionally, when the first charging information includes the at least one quota request, the charging function network element may determine a granted quota based on the quota request, user account information, and the like, and include the granted quota in the response message for the first message. For example, the user account information may be account information of the user of the bridge.

Optionally, when an offline charging method is used, the response message for the first message may further include a traffic threshold, and the traffic threshold indicates a maximum value of traffic transmitted via the bridge. After receiving the traffic threshold, the session management network element may send the traffic threshold to the user plane network element. When detecting that the traffic transmitted via the bridge reaches the traffic threshold, the user plane network element may notify the session management network element that the traffic threshold has been reached, and stop transmitting the traffic via the bridge. After receiving the notification from the user plane network element, the session management network element may apply to the charging function network element for a new traffic threshold again.

In a second possible implementation, the charging method may further include: The session management network element receives neighbor discovery information of the NW-TT or neighbor discovery information of the DS-TT, and sends second charging information to the charging function network element, where the neighbor discovery information of the NW-TT includes information about a neighbor port of the NW-TT port, and the neighbor discovery information of the DS-TT includes information about a neighbor port of the DS-TT port.

Optionally, that the session management network element receives the neighbor discovery information of the NW-TT or the neighbor discovery information of the DS-TT may alternatively be understood as a second charging trigger (trigger) event. That is, the session management network element may send the second charging information to the charging function network element when the second charging trigger (trigger) event is satisfied or occurs. For example, the second charging trigger (trigger) event may also be referred to as a second condition or a second charging trigger.

For example, a default type of the second charging trigger event may be the immediate reporting or the delayed reporting. This is not specifically limited in this application.

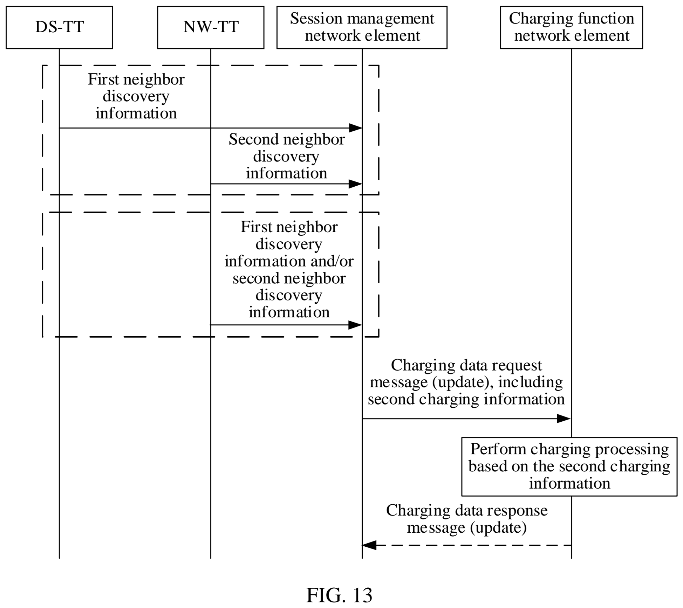

Optionally, when the DS-TT supports an LLDP, the neighbor discovery information may include first neighbor discovery information from the NW-TT and/or second neighbor discovery information from the DS-TT. When the DS-TT does not support an LLDP, the neighbor discovery information may include first neighbor discovery information and/or second neighbor discovery information from the NW-TT. The first neighbor discovery information includes the neighbor discovery information of the NW-TT. The second neighbor discovery information includes the neighbor discovery information of the DS-TT. That is, as shown in FIG. 13, when receiving the first neighbor discovery information and/or the second neighbor discovery information, the session management network element sends the second charging information to the charging function network element.

For example, the first neighbor discovery information and/or the second neighbor discovery information may be sent by the DS-TT or the NW-TT to the session management network element in step S505 in the procedure shown in FIG. 5.

Optionally, in the second possible implementation, in addition to the first identifier and/or the second identifier, the second charging information may further include at least one of the following: the information about the neighbor port of the NW-TT port, the information about the neighbor port of the DS-TT port, a delay on the NW-TT port, a data flow class supported by the NW-TT port, a delay on the DS-TT port, and a data flow class supported by the DS-TT port.

For example, the delay on the NW-TT port, the data flow class supported by the NW-TT port, the delay on the DS-TT port, and the data flow class supported by the DS-TT port may be obtained by the session management network element in step S503 in the procedure shown in FIG. 5.

Optionally, after receiving the second charging information, the charging function network element may associate the pieces of charging information of the bridge based on the first identifier (or based on the first identifier and the second identifier), for example, associate the first charging information with the second charging information.

Optionally, the charging function network element may further determine a network topology of the TSN network based on the information about the neighboring port of the NW-TT port and/or the information about the neighboring port of the DS-TT port, and determine a corresponding charging rate based on the network topology. Subsequently, charging for a bridge association may be performed by using the charging rate.

Optionally, that the session management network element sends the second charging information to the charging function network element includes: The session management network element sends a second message to the charging function network element, where the second message includes the second charging information. The second message is for updating charging data. For example, the second message may be a charging data request message (update (update)), and is also referred to as an updated charging data request message. After receiving the second message, the charging function network element may send a response message for the second message to the session management network element. For example, the response message for the second message may be a charging data response message (update), and is also referred to as an updated charging data response message.

Optionally, the second message may further include a charging trigger event (namely, the second charging trigger event) that triggers this time of charging information reporting. For example, the second charging trigger event may be understood as a part of parameters of the second charging information, or may be understood as a parallel parameter at a same level as the second charging information.

Optionally, after receiving the second message, the charging function network element may update a type of the second charging trigger event, may disable the second charging trigger event, or may enable another charging trigger event. Accordingly, the response message for the second message may indicate results of these operations.

In a third possible implementation, the charging method may further include: The session management network element receives an updated PCC rule for the bridge, and sends third charging information to the charging function network element, where the updated PCC rule for the bridge is for updating a QoS flow, and the QoS flow is for carrying a data flow of the third-party network; and the third charging information includes updated quality of service information.

Optionally, that the session management network element receives the updated PCC rule for the bridge may alternatively be understood as a third charging trigger (trigger) event. That is, the session management network element may send the third charging information to the charging function network element when the third charging trigger (trigger) event is satisfied or occurs. For example, the third charging trigger (trigger) event may also be referred to as a third condition or a third charging trigger.

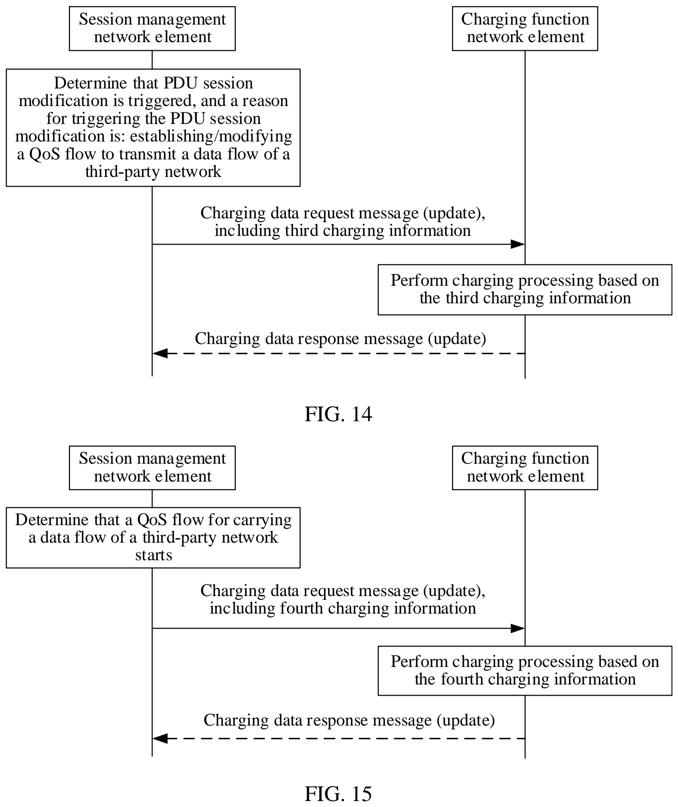

Optionally, that the session management network element receives the updated PCC rule for the bridge may alternatively be understood as: To establish/modify the QoS flow to transmit the data flow of the third-party network, PDU session modification is triggered. In other words, a third charging trigger event includes that the PDU session modification is triggered, and a reason for triggering the PDU session modification is establishing/modifying the QoS flow to transmit the data flow of the third-party network. That is, as shown in FIG. 14, the session management network element sends the third charging information to the charging function network element when the PDU session modification is triggered and the trigger reason is that establishing/modifying the QoS flow to transmit the data flow of the third-party network.

For example, a default type of the third charging trigger event may be the immediate reporting. The triggered PDU session modification may be the PDU session modification procedure in step S604 in the procedure shown in FIG. 6.

Optionally, in the third possible implementation, in addition to the first identifier, the second identifier, and the updated quality of service information, the third charging information may further include at least one of the following: a TSC assistance container, a QoS policy, and a PMIC.

For example, the TSC assistance container may include TSCAI of the data flow that is of the third-party network and that is transmitted via the bridge, where the TSCAI may be for describing at least one of a flow direction, a periodicity, a burst arrival time, and survival time. The QoS policy is a QoS policy of the data flow that is of the third-party network and that is transmitted via the bridge. The PMIC includes information about the DS-TT port and/or information about the NW-TT port. The TSC assistance container and the QoS policy may be configured in the PCC rule, for example, may be configured in the PCC rule sent by the PCF network element in step S603. The PMIC may be received from the DS-TT or the NW-TT.

Optionally, after receiving the third charging information, the charging function network element may associate the pieces of charging information of the bridge based on the first identifier (or based on the first identifier and the second identifier), for example, associate the third charging information with at least one of the first charging information and second charging information.

Optionally, the charging function network element may further determine a charging rate based on the TSC assistance container and/or the QoS policy. For example, the charging function network element determines a higher charging rate when a QoS requirement is higher, and determines a lower charging rate when a QoS requirement is lower. Subsequently, charging for bridge association may be performed by using the charging rate.

Optionally, that the session management network element sends the third charging information to the charging function network element includes: The session management network element sends a third message to the charging function network element, where the third message includes the third charging information. The third message is for updating charging data. For example, the third message may be a charging data request message (update). After receiving the third message, the charging function network element may send a response message for the third message to the session management network element. For example, the response message for the third message may be a charging data response message (update).

Optionally, the third message may further include a charging trigger event (for example, the third charging trigger event) that triggers this time of charging information reporting. For example, the third charging trigger event may be understood as a part of parameters of the third charging information, or may be understood as a parallel parameter at a same level as the third charging information.

Optionally, after receiving the third message, the charging function network element may update a type of the third charging trigger event, may disable the third charging trigger event, or may enable another charging trigger event. Accordingly, the response message for the third message may indicate results of these operations.

In a fourth possible implementation, the charging method may further include: The session management network element determines that a QoS flow for carrying a data flow of the third-party network starts, and sends fourth charging information to the charging function network element.

Optionally, that the session management network element determines that the QoS flow for carrying the data flow of the third-party network starts may alternatively be understood as a fourth charging trigger (trigger) event. That is, the session management network element may send the fourth charging information to the charging function network element when the fourth charging trigger (trigger) event is satisfied or occurs. For example, the fourth charging trigger (trigger) event may also be referred to as a fourth condition or a fourth charging trigger.

Optionally, that the fourth charging trigger event is that the QoS flow for carrying the data flow of the third-party network starts may alternatively be understood as that the fourth charging trigger includes a start of TSN QoS flow trigger (Start of TSN QoS flow trigger), a start of QoS flow trigger (start of QoS flow trigger), or a start of service data flow trigger (Start of service data flow trigger). That is, as shown in FIG. 15, the session management network element sends the fourth charging information to the charging function network element when determining that the QoS flow for carrying the data flow of the third-party network starts. For example, a default type of the fourth charging trigger event may be the immediate reporting. The charging function network element may alternatively modify the type of the fourth charging trigger event to the delayed reporting.

Optionally, that the QoS flow for carrying the data flow of the third-party network starts may be understood as that a data flow on the QoS flow starts to be transmitted. When the PDU session or the QoS flow is successfully established, data transmission is not necessarily performed. Therefore, in this case, it cannot be considered that the QoS flow starts.

Optionally, the start of TSN QoS flow trigger, the start of QoS flow trigger, or the start of service data flow trigger may be preconfigured by the charging function network element for the session management network element, may be preconfigured by a policy control network element for the session management network element, may be locally configured by the session management network element, or may be configured by another network element. This is not specifically limited in this application.

Optionally, the session management network element may learn, based on reporting of the user plane network element, that the QoS flow for carrying the data flow of the third-party network starts. For example, when detecting that the QoS for carrying the data flow of the third-party network starts, the user plane network element may report second indication information to the session management network element, where the second indication information indicates that the QoS flow for carrying the data flow of the third-party network starts. After receiving the second indication information, the session management network element may learn that the QoS for carrying the data flow of the third-party network starts. For example, the second indication information may include the start of TSN QoS flow trigger, the start of QoS flow trigger, or the start of service data flow trigger.

Optionally, the session management network element may preconfigure the user plane network element to perform reporting when the user plane network element detects that the QoS flow for carrying the data flow of the third-party network starts. For example, after receiving configuration information of the start of TSN QoS flow trigger, the start of QoS flow trigger, or the start of service data flow trigger, the session management network element may send a reporting rule to the user plane network element, to configure (or indicate) the user plane network element to report when the user plane network element detects that the QoS flow for carrying the data flow of the third-party network starts.

Optionally, in the fourth possible implementation, in addition to the first identifier and the second identifier, the fourth charging information may further include at least one of the following: a TSC assistance container, a QoS policy, a quota request, and traffic usage.

Optionally, when the default type of the fourth charging trigger event is the immediate reporting, the fourth charging information does not include first traffic usage. When the default type of the fourth charging trigger event is the delayed reporting, the fourth charging information may include first traffic usage. The first traffic usage may be traffic usage in duration from starting of the QoS flow for carrying the data flow of the third-party network to reporting of the fourth charging information.

Optionally, if the type of the fourth charging trigger event is the delayed reporting, when the QoS flow for carrying the data flow of the third-party network starts, the session management network element starts to record the traffic usage, stops recording when a reporting time point arrives (the traffic usage recorded in this time is the first traffic usage), and sends the fourth charging information. For example, the reporting time point may be time at which the next charging trigger event whose type is the immediate reporting is satisfied (or occurs).

Optionally, after receiving the fourth charging information, the charging function network element may associate, based on the first identifier (or based on the first identifier and the second identifier), the fourth charging information with a charging resource established for the bridge, or associate the pieces of charging information of the bridge based on the first identifier (or based on the first identifier and the second identifier), for example, associate the fourth charging information with at least one of the first charging information, second charging information, and third charging information.

Optionally, when the fourth charging information includes the quota request, the charging function network element may determine a granted quota based on at least one of a requested quota, a delay on the NW-TT port and/or a delay on the DS-TT port, a data flow class supported by the NW-TT port and/or a data flow class supported by the DS-TT port, and user account information. For example, if the delay on the NW-TT port and/or the delay on the DS-TT port are/is higher, a larger quota may be granted; or if the delay on the NW-TT port and/or the delay on the DS-TT port are/is lower, a smaller quota may be granted.

Optionally, when the fourth charging information includes the traffic usage, if an offline charging manner is used, the charging function network element may associate the traffic usage by using the first identifier, and accumulate traffic of the bridge, to obtain a sum of the traffic of the bridge.

Optionally, after receiving the fourth charging information, the charging function network element may further perform performance assurance charging based on at least one of the TSC assistance container, the QoS policy, the traffic usage, and user subscription information. For example, a user may be the TSN network, a TSN service provider, the consumer user, or the third party. The user subscription information may indicate transmission performance guaranteed to the user.

For example, the charging function network element may determine, based on the TSC assistance container, the QoS policy, and the traffic usage, whether transmission of the traffic usage satisfies the transmission performance guaranteed to the user. If the transmission of the traffic usage satisfies the transmission performance guaranteed to the user, the charging function network element may perform charging based on an original charging rate. If the transmission of the traffic usage does not satisfy the transmission performance guaranteed to the user, a billing domain may subsequently perform an operation such as fee deduction, giving preference to a current or next bill, or fee refund.

Optionally, that the session management network element sends the fourth charging information to the charging function network element includes: The session management network element sends a fourth message to the charging function network element, where the fourth message includes the fourth charging information. The fourth message is for updating charging data. For example, the fourth message may be a charging data request message (update). After receiving the fourth message, the charging function network element may send a response message for the fourth message to the session management network element. For example, the response message for the fourth message may be a charging data response message (update).

Optionally, when the fourth charging information includes the quota request, the response message for the fourth message may include the granted quota. When the fourth charging information includes the traffic usage, the response message for the fourth message may indicate that the charging function network element receives the traffic usage.

Optionally, the fourth message may further include a charging trigger event (namely, the fourth charging trigger event) that triggers this time of charging information reporting. For example, the fourth charging trigger event may be understood as a part of parameters of the fourth charging information, or may be understood as a parallel parameter at a same level as the fourth charging information.

Optionally, after receiving the fourth message, the charging function network element may update a type of the fourth charging trigger event, may disable the fourth charging trigger event, or may enable another charging trigger event. Accordingly, the response message for the fourth message may indicate results of these operations.

Optionally, the mobile communication system may provide the plurality of bridges for the TSN network. In other words, there may be a plurality of bridges serving the TSN network in the mobile communication system. In other words, the TSN service provider may deploy the plurality of bridges in the mobile communication system. In this scenario, if an online charging manner is used, centralized traffic authorization or unified quota management may be performed on the plurality of bridges that belong to a same TSN network.

For example, the session management network element may apply for a traffic quota for each bridge of the TSN network. The charging function network element may associate the applied traffic quota of each bridge based on the second identifier, and perform quota granting based on a total traffic quota of the TSN network.

For example, it is assumed that the total traffic quota of the TSN network is 1 gigabyte (gigabyte, GB), an applied traffic quota of a bridge 1 is 100 megabytes (megabytes, MB), an applied traffic quota of a bridge 2 is 200 MB, and the charging function network element has respectively granted traffic quotas of 100 MB and 200 MB to the bridge 1 and the bridge 2. In this scenario, if an applied traffic quota of a bridge 3 is 800 MB, because a remaining allocable traffic quota of the TSN network is only 700 MB, the charging function network element may grant a maximum traffic quota of 700 MB to the bridge 3.

In a fifth possible implementation, the charging method may further include: The session management network element receives a clock drift report, and sends fifth charging information to the charging function network element. The clock drift report is for clock adjustment, for example, for adjusting TSCAI from a TSN master clock to a mobile communication system clock (for example, a 5G clock). The clock drift report may be sent by the user plane network element.

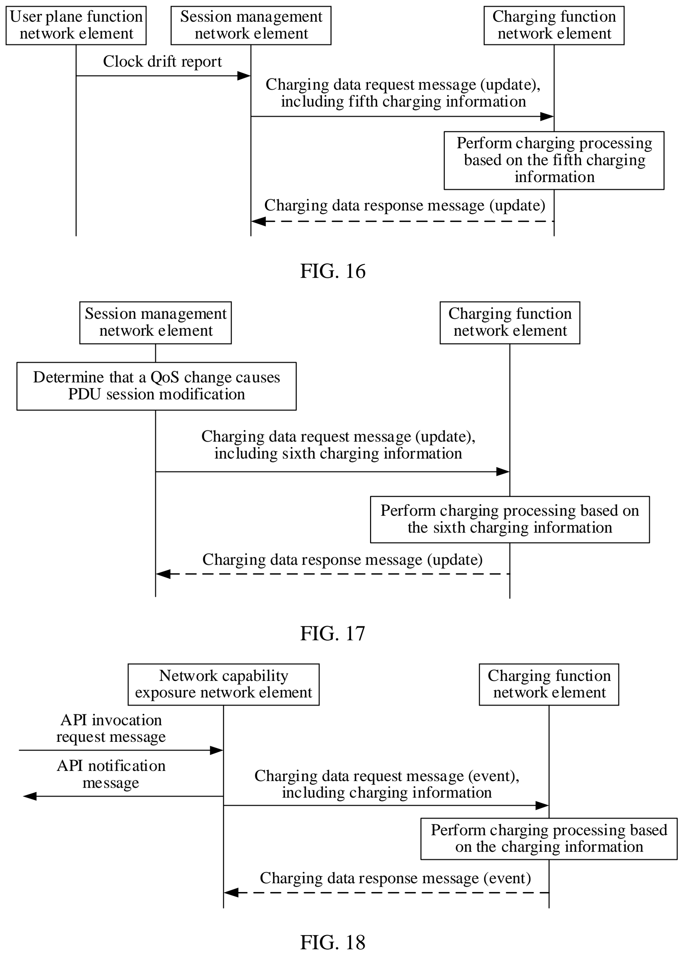

Optionally, that the session management network element receives the clock drift report may alternatively be understood as a fifth charging trigger (trigger) event. That is, the session management network element may send the fifth charging information to the charging function network element when the fifth charging trigger (trigger) event is satisfied or occurs. For example, the fifth charging trigger (trigger) event may also be referred to as a fifth condition or a fifth charging trigger. That is, as shown in FIG. 16, when receiving the clock drift report from the user plane network element, the session management network element sends the fifth charging information to the charging function network element. For example, a default type of the fifth charging trigger event may be the delayed reporting.

Optionally, the clock drift report may have another name, for example, clock drift information, clock adjustment information, indication information, or clock information. A name of the clock drift report is not specifically limited in this application.

Optionally, in the fifth possible implementation, in addition to the first identifier and the second identifier, the fifth charging information may further include at least one of the following: a clock drift identifier, TSCAI obtained through clock adjustment, and traffic usage.

Optionally, the clock drift identifier indicates that the session management network element has performed clock adjustment. The session management network element may adjust the TCSAI from the TSN master clock to the mobile communication system clock, to obtain TSCAI, obtained through clock adjustment, of a QoS flow for carrying a data flow of the third-party network via the bridge. The traffic usage may be traffic usage recorded when the fifth charging trigger event is satisfied.

Optionally, after receiving the fifth charging information, the charging function network element may associate, based on the first identifier (or based on the first identifier and the second identifier), the fifth charging information with a charging resource established for the bridge, or associate the pieces of charging information of the bridge based on the first identifier (or based on the first identifier and the second identifier), for example, associate the fifth charging information with at least one of the first charging information, second charging information, third charging information, fourth charging information, and the fifth charging information.

Optionally, when the fifth charging information includes the clock drift identifier, the charging function network element may charge for clock adjustment performed by the session management network element for the bridge, for example, by times. Charging is performed once each time the session management network element performs clock adjustment.

Optionally, when the fifth charging information includes the TSCAI obtained through clock adjustment, the charging function network element may adjust a charging rate, for example, use a first charging rate for traffic corresponding to TCSAI on which clock adjustment has not been performed, and use a second charging rate for traffic corresponding to the TCSAI obtained through clock adjustment.

Optionally, that the session management network element sends the fifth charging information to the charging function network element includes: The session management network element sends a fifth message to the charging function network element, where the fifth message includes the fifth charging information. The fifth message is for updating charging data. For example, the fifth message may be a charging data request message (update). After receiving the fifth message, the charging function network element may send a response message for the fifth message to the session management network element. For example, the response message for the fifth message may be a charging data response message (update).

Optionally, the fifth message may further include a charging trigger event (namely, the fifth charging trigger event) that triggers this time of charging information reporting. For example, the fifth charging trigger event may be understood as a part of parameters of the fifth charging information, or may be understood as a parallel parameter at a same level as the fifth charging information.

Optionally, after receiving the fifth message, the charging function network element may update a type of the fifth charging trigger event, may disable the fifth charging trigger event, or may enable another charging trigger event. Accordingly, the response message for the fifth message may indicate results of these operations.

In a sixth possible implementation, the method further includes: The session management network element sends sixth charging information to the charging function network element when a sixth charging trigger (trigger) event is satisfied or occurs. For example, the sixth charging trigger (trigger) event may also be referred to as a sixth condition or a sixth charging trigger.

Optionally, the sixth charging trigger event includes PDU session modification triggered (or caused) by a QoS change. In other words, the sixth charging trigger event includes that the PDU session modification is triggered, and a reason for triggering the PDU session modification is the QoS change. That is, as shown in FIG. 17, the session management network element sends the sixth charging information to the charging function network element when the PDU session modification is caused by the QoS change. For example, a default type of the sixth charging trigger event may be the delayed reporting.

For example, the QoS change may be caused by a port status change indicated by a BMCA result. Refer to the related descriptions of the procedure shown in FIG. 7. Details are not described herein again. Certainly, the QoS change may alternatively be caused by another reason. This is not specifically limited in this application.

Optionally, in the sixth possible implementation, in addition to the first identifier and the second identifier, the sixth charging information may further include at least one of the following: a changed QoS policy, traffic usage, a requested quota, and the BMCA result.

Optionally, the traffic usage may be a traffic usage that is before the QoS changes. The requested quota may be a traffic quota newly requested due to the QoS change. The BMCA result indicates a port status or port status change of the DS-TT port and/or a port status or port status change of the NW-TT port.

Optionally, after receiving the sixth charging information, the charging function network element may associate, based on the first identifier (or based on the first identifier and the second identifier), the sixth charging information with a charging resource established for the bridge, or associate the pieces of charging information of the bridge based on the first identifier (or based on the first identifier and the second identifier), for example, associate the sixth charging information with at least one of the first charging information, second charging information, third charging information, and fourth charging information.

Optionally, when the sixth charging information includes the changed QoS policy, the charging function network element may store the changed QoS policy, or adjust a corresponding charging rate based on the changed QoS policy.

Optionally, when the sixth charging information includes the BMCA result, the charging function network element may update a port status based on the BMCA result.

Optionally, that the session management network element sends the sixth charging information to the charging function network element includes: The session management network element sends a sixth message to the charging function network element, where the sixth message includes the sixth charging information. The sixth message is for updating charging data. For example, the sixth message may be a charging data request message (update). After receiving the sixth message, the charging function network element may send a response message for the sixth message to the session management network element. For example, the response message for the sixth message may be a charging data response message update.

Optionally, the sixth message may further include a charging trigger event (for example, the sixth charging trigger event) that triggers this time of charging information reporting. For example, the sixth charging trigger event may be understood as a part of parameters of the sixth charging information, or may be understood as a parallel parameter at a same level as the sixth charging information.

Optionally, after receiving the sixth message, the charging function network element may update a type of the sixth charging trigger event, may disable the sixth charging trigger event, or may enable another charging trigger event. Accordingly, the response message for the sixth message may indicate results of these operations.

Optionally, in addition to the foregoing six types of charging trigger events, another charging trigger event, for example, a charging trigger event defined in the current 3GPP standard, may be further configured in the session management network element. When the charging trigger event is satisfied or occurs, the session management network element may also send charging information to the charging function network element, where the charging information may include content included in the charging information in the foregoing six possible cases.

Optionally, in the foregoing first to sixth possible implementations, after receiving at least one piece of charging information, the charging function network element may further generate at least one CDR based on the at least one piece of charging information. The CDR generated by the charging function network element may include the first identifier and/or the second identifier. In addition, in the foregoing embodiment, the operation performed by the charging function network element after receiving the charging information may be recorded or reflected in the CDR generated by the charging function network element based on the charging information. That is, the CDR may indicate the operation performed by the charging function network element based on the charging information.

Optionally, after generating the CDR, the charging function network element may send the CDR to the billing domain (billing domain). The billing domain may perform subsequent charging processing based on the CDR.

Optionally, in addition to the charging manner in the foregoing embodiment, a charging system or the billing domain may further perform charging based on a charging periodicity. The charging periodicity may be, for example, a day, a week, a month, or a life cycle of the bridge (for example, duration from establishment of the bridge to release of the bridge). For example, the charging system or the billing domain may count a quantity of PDU sessions associated with the bridge, a quantity of times of TSC flow transmission, and a quantity of users of the TSN network within one charging periodicity, and perform charging based on the counted quantity.

Optionally, one time of TSC flow transmission may be understood as one time of continuous TSC flow transmission. The continuous TSC flow transmission means that interruption time of a TSC flow is less than or equal to a first threshold (for example, 5 seconds) in a transmission process, or the continuous TSC flow transmission complies with a concept of a continuous data flow defined in the mobile communication system (for example, the 5GS). This is not further interpreted in the present invention. Alternatively, a quantity of times of a TSC flow may be determined based on a direction (uplink or downlink) of the TSC flow. For example, one time of TSC flow transmission may be understood as one time of uplink TSC flow transmission or one time of downlink TSC flow transmission.

For example, if there is no downlink TSC flow transmission but only uplink TSC flow transmission within a period of duration, the uplink TSC flow transmission within the duration may be understood as one time of uplink TSC flow transmission; or if there is no uplink TSC flow transmission but only downlink TSC flow transmission within a period of duration, the downlink TSC flow transmission within the duration may be understood as one time of downlink TSC flow transmission.

Optionally, the user of the TSN network may be understood as a user that uses (or accesses) the TSN network, or in other words, a user served by the TSN network. For example, the user of the TSN network may be a TSN station (TSN station, for example, a talker/listener) in the TSN network.

The foregoing describes, by using the example in which the first network element is a session management network element, the charging method provided in this application. The first network element may alternatively be a network capability exposure network element in addition to the session management network element. The following describes the charging method in detail by using an example in which the first network element is a network capability exposure network element, or in other words, the network capability exposure network element supports (or is deployed with) a charging trigger function.

In a possible implementation, when the first network element is a network capability exposure network element, before step S1102, the charging method may further include: receiving an API invocation request (API Invocation Request) message sent by an application function entity of the third-party network. In this scenario, sending the first charging information to the charging function network element includes: sending the first charging information to the charging function network element based on the API invocation request message.

An API is for providing the third-party network with a service of using the bridge, for example, the time synchronization service and/or a delay sensitive transmission service. The API invocation request message includes the information for identifying the bridge, information about the user of the bridge, and an API operation indication. The API operation indication may indicate an API invocation function.

The first charging information includes the information for identifying the bridge, the information about the user of the bridge, and the API operation indication.

In another possible implementation, when the first network element is a network capability exposure network element, before step S1102, the charging method may further include: sending an API notification message to an application function entity of the third-party network. In this scenario, sending the first charging information to the charging function network element includes: sending the first charging information to the charging function network element based on the API notification message.

An API is for providing the third-party network with a service of using the bridge, for example, the time synchronization service and/or a delay sensitive transmission service. The API notification message includes the information for identifying the bridge, information about the user of the bridge, and an API operation indication; and/or the API notification message includes identification information associated with an API invocation request message. The API invocation request message is an API invocation request message corresponding to the API notification message.

The first charging information includes information about an execution result of the API operation indication. Optionally, the first charging information may further include the information for identifying the bridge and the information about the user of the bridge.

That is, as shown in FIG. 18, the network capability exposure network element may send the charging information to the charging function network element when receiving the API invocation request (API Invocation Request) message or sending the API notification message. That is, it may be considered that when the first network element is a network capability exposure network element, the charging trigger event is receiving the API invocation request message or an API notification request message.

For example, the charging information may be carried in the charging data request message (event (Event)). The charging function network element may further reply to the network capability exposure network element with a charging data response message (event). The charging data request message (event) may also be referred to as a charging data request event message. The charging data response message (event) may also be referred to as a charging data response event message.

For example, the API invocation request message, the API notification message, and the charging information may have the following cases.

Case 1: An API invocation message is a policy authorization creation request message.

Optionally, the policy authorization creation request message may be a message sent by the application function network element of the third-party network to a policy control network element via the network capability exposure network element. The policy authorization creation request message may be for requesting to create an AF session associated with a MAC address of the DS-TT port. For example, the policy authorization creation request message may be the policy authorization creation request message in step S502c in the procedure shown in FIG. 5.

Optionally, in the case 1, in addition to the first identifier, the second identifier, and the API operation indication, the first charging information may further include at least one of the following: information about the terminal device or an API invocation type.

Optionally, the API operation indication in the case 1 indicates that API invocation is for policy creation or policy authorization creation. The API invocation type is the API invocation.

Optionally, the API operation indication and/or the information about the terminal device may be carried in API content. That is, the first charging information includes the API content, and the API content includes the API operation indication and/or the information about the terminal device.

Optionally, that the network capability exposure network element sends the first charging information to the charging function network element may include: The network capability exposure network element sends a first charging data request message (event) to the charging function network element, where the first charging data request message (event) includes the first charging information.

Optionally, after receiving the first charging information, the charging function network element may determine a charging rate A based on the first charging information, and then charge, based on the charging rate A, for an operation (for example, the policy creation or the policy authorization creation) corresponding to the first charging information. In addition, the charging function network element may associate the pieces of charging information of the bridge based on the first identifier and/or the second identifier.

Optionally, after receiving the first charging data request message (event), the charging function network element may reply to the network capability exposure network element with a first charging data response message (event).

Case 2: An API invocation message is a policy authorization subscription request message. The policy authorization subscription request message is for subscribing to a change of a PMIC and/or a change of a UMIC. The policy authorization subscription request message includes: The PMIC is associated with the DS-TT port and/or the NW-TT port, and the UMIC is associated with the user plane network element.

Optionally, the policy authorization subscription request message may be a message sent by the application function network element to a policy control network element via the network capability exposure network element. For example, the policy authorization subscription request message may be the policy authorization subscription request message in step S502d in the procedure shown in FIG. 5.

Optionally, in the case 2, in addition to the first identifier, the second identifier, and the API operation indication, the first charging information may further include at least one of the following: information about the terminal device, an API invocation type, subscription information of the PMIC, or subscription information of the UMIC.

Optionally, the API operation indication in the case 2 indicates that API invocation is used for policy subscription or policy authorization subscription. The API invocation type is the API invocation.

Optionally, in the at least one of the foregoing in the first charging information, other information except the API invocation type may be carried in API content. That is, the first charging information includes the API content, and the API content includes the information in the at least one of the foregoing except the API invocation type.

Optionally, that the network capability exposure network element sends the first charging information to the charging function network element may include: The network capability exposure network element sends a second charging data request message (event) to the charging function network element, where the second charging data request message (event) includes the first charging information.

Optionally, after receiving the first charging information, the charging function network element may determine a charging rate B based on the first charging information, and then charge, based on the charging rate B, for an operation corresponding to the first charging information. In addition, the charging function network element may associate the pieces of charging information of the bridge based on the first identifier and/or the second identifier.

Optionally, after receiving the second charging data request message (event), the charging function network element may reply to the network capability exposure network element with a second charging data response message (event).

Case 3: An API invocation message is a neighbor discovery information invocation message and/or a neighbor discovery configuration invocation message, where the neighbor discovery information invocation message includes information about the DS-TT port and/or information about the NW-TT port, and the neighbor discovery configuration invocation message is for configuring and activating an LLDP agent.

Optionally, in the case 3, in addition to the first identifier, the second identifier, and the API operation indication, the first charging information may further include at least one of the following: the information about the DS-TT port, the information about the NW-TT port, information about the terminal device, and an API invocation type.

Optionally, in the case 3, the API operation indication indicates that API invocation is for performing port discovery configuration or neighbor discovery configuration. The API invocation type is the API invocation.

Optionally, in the at least one of the foregoing in the first charging information, other information except the API invocation type may be carried in API content. That is, the first charging information includes the API content, and the API content includes the information in the at least one of the foregoing except the API invocation type.

Optionally, that the network capability exposure network element sends the first charging information to the charging function network element may include: The network capability exposure network element sends a third charging data request message (event) to the charging function network element, where the third charging data request message (event) includes the first charging information.

Optionally, after receiving the first charging information, the charging function network element may determine a charging rate C based on the first charging information, and then charge, based on the charging rate C, for an operation corresponding to the first charging information. In addition, the charging function network element may associate the pieces of charging information of the bridge based on the first identifier and/or the second identifier.

Optionally, after receiving the third charging data request message (event), the charging function network element may reply to the network capability exposure network element with a third charging data response message (event).

Case 4: An API invocation message includes an AF request message. The AF request message indicates a transmission demand or a transmission requirement of a data flow of the third-party network.

Optionally, the AF request message may be a message sent by the application function network element to a policy control network element via the network capability exposure network element. For example, the AF request message may be the AF request message in step S602 or S606 in the procedure shown in FIG. 6.

Optionally, in the case 4, in addition to the first identifier, the second identifier, and the API operation indication, the first charging information may further include at least one of the following: TSCAI, a QoS policy, a service data flow filter, a bridging delay of the bridge, or an API invocation type.

Optionally, in the case 4, the API operation indication indicates that API invocation is for an AF request. The API invocation type is the API invocation.

Optionally, in the at least one of the foregoing in the first charging information, other information except the API invocation type may be carried in API content. That is, the first charging information includes the API content, and the API content includes the information in the at least one of the foregoing except the API invocation type.

Optionally, that the network capability exposure network element sends the first charging information to the charging function network element may include: The network capability exposure network element sends a fourth charging data request message (event) to the charging function network element, where the fourth charging data request message (event) includes the first charging information.

Optionally, after receiving the first charging information, the charging function network element may determine a charging rate D based on the first charging information, and then charge, based on the charging rate D, for an operation corresponding to the first charging information. In addition, the charging function network element may associate the pieces of charging information of the bridge based on the first identifier and/or the second identifier.

Optionally, after receiving the fourth charging data request message (event), the charging function network element may reply to the network capability exposure network element with a fourth charging data response message (event).

Case 5: An API invocation message includes a port status subscription request message. The port status subscription request message is for subscribing to a port status of the DS-TT port and/or a port status of the NW-TT port.

For example, the port status subscription request message may also be referred to as a BMCA result report subscription request message. The port status subscription request message may be a message sent by the application function network element to a policy control network element via the network capability exposure network element. For example, the port status subscription request message may be the BMCA result report subscription request message in step S702 in the procedure shown in FIG. 7.

Optionally, in the case 5, in addition to the first identifier, the second identifier, and the API operation indication, the first charging information may further include at least one of the following: port status subscription information, information about the terminal device, or an API invocation type.

Optionally, in the case 5, the API operation indication indicates that API invocation is for port status subscription. The API invocation type is the API invocation.

Optionally, in the at least one of the foregoing in the first charging information, other information except the API invocation type may be carried in API content. That is, the first charging information includes the API content, and the API content includes the information in the at least one of the foregoing except the API invocation type.

Optionally, that the network capability exposure network element sends the first charging information to the charging function network element may include: The network capability exposure network element sends a fifth charging data request message (event) to the charging function network element, where the fifth charging data request message (event) includes the first charging information.

Optionally, after receiving the first charging information, the charging function network element may associate a port status subscription event of the bridge based on the first identifier, and charge for port status subscription of the bridge. Alternatively, the charging function network element may associate port status subscription events of bridges in a TCN network based on the second identifier, and charge for port status subscription of a first TSN network.

Optionally, after receiving the first charging information, the charging function network element may determine a charging rate E based on the first charging information, and then charge, based on the charging rate E, for an operation corresponding to the first charging information. In addition, the charging function network element may associate the pieces of charging information of the bridge based on the first identifier and/or the second identifier.

Optionally, after receiving the fifth charging data request message (event), the charging function network element may reply to the network capability exposure network element with a fifth charging data response message (event).

Case 6: The API notification message includes a policy authorization notification message.

Optionally, the policy authorization notification message may be a message sent by a policy control network element to the application function network element of the third-party network via the network capability exposure network element.

Optionally, the policy authorization notification message may be for notifying the application function network element of information about the bridge. For example, the policy authorization notification message may be the policy authorization notification message in step S502b in the procedure shown in FIG. 5.

Optionally, in the case 6, the first charging information may further include at least one of the following: a port number of the DS-TT port, a MAC address of the DS-TT port, a port number of the NW-TT port, a MAC address of the NW-TT port, an IP address of the terminal device, UE-DS-TT residence time, information about the user plane tunnel, information about the terminal device (for example, an identifier of a first terminal device), and an API invocation type. For example, in the case 6, the API invocation type is an API notification.

Optionally, in the at least one of the foregoing in the first charging information, other information except the API invocation type may be carried in API content. That is, the first charging information includes the API content, and the API content includes the information in the at least one of the foregoing except the API invocation type.

Optionally, after receiving the first charging information, the charging function network element may determine a charging rate F based on the first charging information, and then charge, based on the charging rate F, for an operation (for example, policy authorization or policy authorization notification) corresponding to the first charging information.

Optionally, that the network capability exposure network element sends the first charging information to the charging function network element may include: The network capability exposure network element sends a sixth charging data request (charging data request) message (event (Event)) to the charging function network element, where the sixth charging data request message (event) includes the first charging information.

Optionally, after receiving the sixth charging data request event message, the charging function network element may reply to the network capability exposure network element with a sixth charging data response (charging data response) message (event).

Case 7: The API notification message includes delay information and/or a data flow class.

Optionally, delay information includes at least one of a delay on a first NW-TT port and a delay on a first DS-TT port. The data flow class includes at least one of a data flow class supported by the first NW-TT port and a data flow class supported by the first DS-TT port.

Optionally, the delay information includes a delay on the NW-TT port and/or a delay on the DS-TT port, and the data flow class includes at least one of a data flow class supported by the NW-TT port and a data flow class supported by the DS-TT port. For example, the delay information and the data flow class may be the transmission delay and the traffic class table in step S503 in the procedure shown in FIG. 5.

Optionally, in the case 7, the first charging information may further include at least one of the following: the delay on the NW-TT port, the delay on the DS-TT port, the data flow class supported by the NW-TT port, the data flow class supported by the DS-TT port, information about the terminal device, or an API invocation type.

Optionally, in the case 7, the API operation indication corresponding to the API notification message indicates to report the delay information and/or data flow class. The API invocation type is an API notification.

Optionally, in the at least one of the foregoing in the first charging information, other information except the API invocation type may be carried in API content. That is, the first charging information includes the API content, and the API content includes the information in the at least one of the foregoing except the API invocation type.

Optionally, that the network capability exposure network element sends the first charging information to the charging function network element may include: The network capability exposure network element sends a seventh charging data request message (event) to the charging function network element, where the seventh charging data request message (event) includes the first charging information.

Optionally, after receiving the first charging information, the charging function network element may determine a charging rate G based on the first charging information, and then charge, based on the charging rate G, for an operation corresponding to the first charging information. In addition, the charging function network element may associate the pieces of charging information of the bridge based on the first identifier and/or the second identifier.

Optionally, after receiving the seventh charging data request message (event), the charging function network element may reply to the network capability exposure network element with a seventh charging data response message (event).

Case 8: The API notification message is neighbor discovery notification information. The Neighbor discovery notification information includes first neighbor discovery information and/or second neighbor discovery information, where the first neighbor discovery information includes information about a neighbor port of the NW-TT port, and the second neighbor discovery information includes information about a neighbor port of the DS-TT port.

Optionally, neighbor discovery information may be information sent by a policy control network element to the application function via the network capability expsure network element. For example, the neighbor discovery information may be the neighbor discovery information in step S504 in the procedure shown in FIG. 5.

Optionally, in the case 8, the first charging information may further include at least one of the following: the first neighbor discovery information, the second neighbor discovery information, information about the terminal device, or an API invocation type.

Optionally, in the case 8, the API operation indication corresponding to the API notification message indicates to report port discovery information or the neighbor discovery information. The API invocation type is an API notification.

Optionally, in the at least one of the foregoing in the first charging information, other information except the API invocation type may be carried in API content. That is, the first charging information includes the API content, and the API content includes the information in the at least one of the foregoing except the API invocation type.

Optionally, that the network capability exposure network element sends the first charging information to the charging function network element may include: The network capability exposure network element sends an eighth charging data request message (event) to the charging function network element, where the eighth charging data request message (event) includes the first charging information.

Optionally, after receiving the first charging information, the charging function network element may determine a charging rate H based on the first charging information, and then charge, based on the charging rate H, for an operation corresponding to the first charging information. In addition, the charging function network element may associate the pieces of charging information of the bridge based on the first identifier and/or the second identifier.

Optionally, after receiving the first charging information, the charging function network element may further determine a network topology of the TSN network based on the first neighbor discovery information and/or the second neighbor discovery information, and determine a corresponding charging rate based on the network topology. Subsequently, charging may be performed by using the charging rate.

Optionally, after receiving the eighth charging data request message (event), the charging function network element may reply to the network capability exposure network element with an eighth charging data response message (event).

Case 9: The API notification message includes port status information. The port status information indicates a port status of the DS-TT port and/or a port status of the NW-TT port. The port status information may also be referred to as a BMCA result.

For example, the port status information may be information sent by a policy control network element to the application function network element via the network capability exposure network element. For example, the port status information may be the BMCA result in step S706 in the procedure shown in FIG. 7.

Optionally, in the case 9, the first charging information may further include at least one of the following: the port status information, information about the terminal device, or an API invocation type.

Optionally, in the case 9, the API operation indication corresponding to the API notification message indicates to report a port status. The API invocation type is an API notification.

Optionally, in the at least one of the foregoing in the first charging information, other information except the API invocation type may be carried in API content. That is, the first charging information includes the API content, and the API content includes the information in the at least one of the foregoing except the API invocation type.

Optionally, that the network capability exposure network element sends the first charging information to the charging function network element may include: The network capability exposure network element sends a ninth charging data request message (event) to the charging function network element, where the ninth charging data request message (event) includes the first charging information.

Optionally, after receiving the first charging information, the charging function network element may associate a port status information reporting event of the bridge based on the first identifier, and charge for port status information reporting of the bridge. Alternatively, the charging function network element may associate port status information reporting events of bridges in a TCN network based on the second identifier, to charge for port status information reporting of the TSN network.

Optionally, the charging function network element may associate port status subscription and port status information reporting event pairs of bridges based on the first identifier, to perform consolidated charging on port status subscription and port status information reporting. Alternatively, the charging function network element may associate port status subscription and port status information reporting event pairs of bridges in the TSN network based on the second identifier, to perform consolidated charging on port status subscription and port status information reporting of the TSN network.

Optionally, after receiving the first charging information, the charging function network element may determine a charging rate I based on the first charging information, and then charge, based on the charging rate I, for an operation corresponding to the first charging information. In addition, the charging function network element may associate the pieces of charging information of the bridge based on the first identifier and/or the second identifier.

Optionally, after receiving the ninth charging data request message (event), the charging function network element may reply to the network capability exposure network element with a ninth charging data response message (event).

Optionally, after receiving the charging information, the charging function network element may further generate a CDR based on the charging information. The CDR generated by the charging function network element may include the first identifier and the second identifier. In addition, in the foregoing embodiment, the operation performed by the charging function network element after receiving the charging information may be recorded or reflected in the CDR generated by the charging function network element based on the charging information. That is, the CDR may indicate the operation performed by the charging function network element based on the charging information.

Optionally, after generating the CDR, the charging function network element may send the CDR to a billing domain, and the billing domain may perform subsequent charging processing based on the CDR.

In some embodiments, the TSN AF network element may alternatively be used as the first network element to send charging information to the charging function network element.

In a possible implementation, a condition (or in other words, a charging trigger event) for sending the charging information by the TSN AF network element is similar to a condition for sending the charging information by the network capability exposure network element. For example, when receiving the API invocation request message or sending the API notification message, the network capability exposure network element sends the charging information to the charging function network element, where the API invocation request message usually includes a message or information sent by the TSN AF network element to the policy control network element, and the API notification message usually includes a message or information sent by the policy control network element to the TSN AF network element. Therefore, the TSN AF network element may send the charging information to the charging function network element when receiving the information in the API notification message or when sending the message or the information in the API invocation request message.

Optionally, the charging information sent by the TSN AF network element is similar to the charging information sent by the network capability exposure network element. A difference lies in that the API content in the charging information sent by the network capability exposure network element may be referred to as an application event, and a function and content of the application event are respectively the same as a function and content of the API content. The API invocation type may be referred to as a type of the application event, and the type of the application event includes an invocation or a notification. The API operation indication may be referred to as an application event indication.

In other words, the TSN AF network element may also send the charging information to the charging function network element in nine cases. The nine cases respectively correspond to the foregoing case 1 to case 9. For example, a case corresponding to the foregoing case 6 may be: When receiving the policy authorization notification message, the TSN AF network element sends the charging information a to the charging function network element. Accordingly, charging information a is similar to the first charging information in the case 6. A difference lies in that the API operation indication in the first charging information may be referred to as the application event indication in the charging information a, and the API invocation type in the first charging information may be referred to as the type of the application event in the charging information a.

For example, a case corresponding to the foregoing case 1 may be: When sending the policy authorization creation request message, the TSN AF network element sends charging information b to the charging function network element. Accordingly, a difference between the charging information b and the first charging information in the case 1 lies in that the API operation indication in charging information B may be referred to as the application event indication in the charging information b, and the API invocation type in the first charging information may be referred to as the type of the application event in the charging information b. The rest may be deduced by analogy. Correspondence of other cases is similar. Details are not described herein again.

In another possible implementation, when the TSN AF network element is used as the first network element, the TSN AF network element may receive a message from the CNC node. In this case, sending the first charging information to the charging function network element includes: sending the first charging information to the charging function network element based on the message from the CNC node.

The message from the CNC node is a request message of the third-party network, and the message from the CNC node includes at least one of the following: the information for identifying the bridge, the information about the user of the bridge, and a requested operation indication. The requested operation indication indicates an operation that the CNC node requests the operator network to perform.

The first charging information may further include configuration and management information of the bridge and/or configuration information of the data flow of the third-party network.

In still another possible implementation, when the TSN AF network element is used as the first network element, the TSN AF network element may receive, from the policy control network element, information related to the bridge. In this case, sending the first charging information to the charging function network element includes: sending the first charging information to the charging function network element based on the information related to the bridge.

The information related to the bridge is information sent to the third-party network, and the information related to the bridge includes at least one of: the information for identifying the bridge, the information about the user of the bridge, and an operation indication requested by the third-party network.

The first charging information includes information about an execution result corresponding to the operation indication requested by the third-party network. Optionally, the first charging information may further include the information for identifying the bridge and the information about the user of the bridge.

Optionally, the first charging information may further include bridge information, port information of the bridge, and the like that are needed for configuration and management information of the bridge.

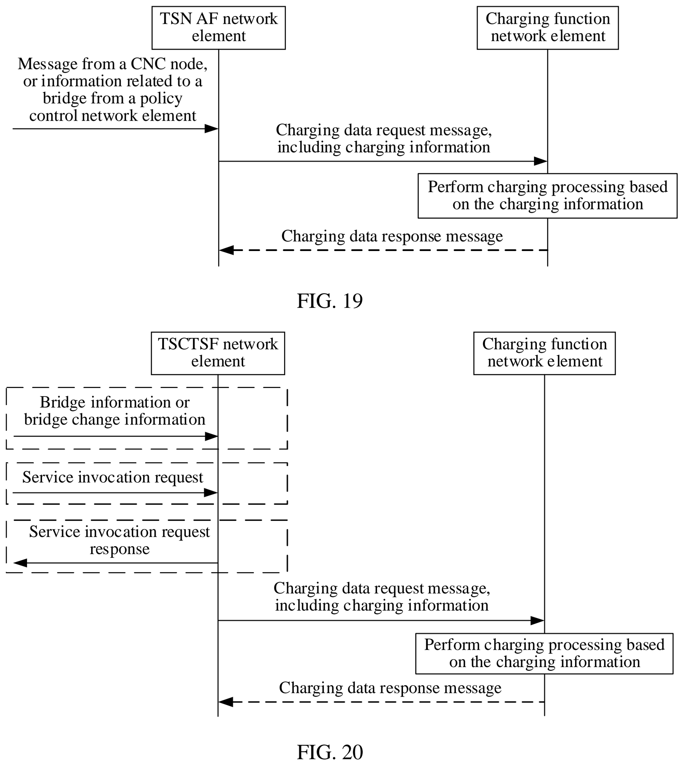

In other words, as shown in FIG. 19, when receiving the message from the CNC node and/or receiving, from the policy control network element, the information related to the bridge, the TSN AF network element may send the charging information to the charging function network element.

In some embodiments, a TSCTSF network element may alternatively be used as the first network element to send charging information to the charging function network element.

In a possible implementation, a condition (or a charging trigger event) for sending the charging information by the TSCTSF network element is the same as the condition for sending the charging information by the TSN AF network element. In a same condition, content of the charging information sent by the TSCTSF network element is the same as content of the charging information sent by the TSN AF network element. Refer to the related descriptions that correspond when the TSN AF network element is used as the first network element. Details are not described herein again.

In another possible implementation, as shown in FIG. 20, the TSCTSF network element may send the charging information to the charging function network element when receiving the information about the bridge or changed information of the bridge. In this case, in addition to the first identifier and the second identifier, the charging information may include the information about the bridge received by the TSCTSF network element.

For example, the information about the bridge may include at least one of the following: the port number of the DS-TT port, the MAC address of the DS-TT port, the port number of the NW-TT port, the MAC address of the NW-TT port, the IP address of the terminal device, the UE-DS-TT residence time of the terminal device, the information about the user plane tunnel (for example, the identifier of the PDU session), the information about the terminal device (for example, the identifier of the first terminal device), the information about the neighbor port of the DS-TT port, the information about the neighbor port of the DS-TT port, the delay on the NW-TT port, the delay on the DS-TT port, the data flow class supported by the NW-TT port, the data flow supported by the DS-TT port, port status information of the DS-TT port, port status information of the NW-TT port, the PMIC, and the UMIC.

For example, the changed information of the bridge is a result (or information) obtained through change of the information about the bridge. The TSCTSF may subscribe to the information about the bridge. When the subscribed information is changed subsequently, the session management network element may send, to the TSCTSF network element via the policy control network element, the information obtained through the change, namely, the changed information.

In still another possible implementation, as shown in FIG. 20, the TSCTSF network element may receive a service invocation request message, and send the first charging information to the charging function network element based on the invocation request message. Alternatively, the TSCTSF network element may send a response message for the service invocation request, and send the first charging information to the charging function network element based on the response message. For example, a service is a service provided by the mobile communication system. For example, a first service may include the time synchronization service, an access stratum time distribution (access stratum time distribution, ASTI) service, and a QoS and TSC assistance service.

Optionally, a service invoker may be the application function network element or the network capability exposure network element. That is, the application function network element or the network capability exposure network element may invoke the service. The TSCTSF network element may send the charging information to the charging function network element when receiving a service invocation request from the application function network element or the network capability exposure network element; and/or the TSCTSF network element may send the charging information to the charging function network element when sending a service invocation request response to the application function network element or the network capability exposure network element.

The charging information may include the first identifier and the second identifier. Further, the charging information may further include the information in the charging information in the foregoing embodiment. Refer to the foregoing related descriptions. Details are not described herein again.

In some embodiments, the operator may deploy only one of the session management network element, the network capability exposure network element, the TSN AF network element, and a TSCTSF network element as the first network element. Alternatively, the operator may deploy a plurality of network elements in the session management network element, the network capability exposure network element, the TSN AF network element, and a TSCTSF network element as first network elements. That is, there may be a plurality of first network elements simultaneously. For a condition for sending charging information and content of the charging information that correspond when the session management network element, the network capability exposure network element, the TSN AF network element, and the TSCTSF network element are used as first network elements, refer to the foregoing descriptions. Details are not described herein again. When there are a plurality of first network elements:

Optionally, the charging function network element may associate, based on the first identifier, charging information of bridges reported by first network elements, for example, associate a plurality of pieces of charging information including the first identifier as one group of charging information.

Optionally, the charging function network element may identify whether there are a plurality of pieces of charging information for a same charging scenario in the group of received charging information. For example, when both the TSN AF network element and the network capability exposure network element are used as first network elements, transmission of a same message may trigger each of the TAN AF network element and the network capability exposure network element to report charging information. For example, the network capability exposure network element reports the charging information when receiving the API notification request message including the policy authorization notification message, and the TSN AF network element also reports the charging information when receiving the policy authorization notification message. In this case, the charging information reported by the TSN AF network element and the charging information reported by the network capability exposure network element are for the same charging scenario.

Optionally, when receiving the plurality of pieces of charging information for the same charging scenario, the charging function network element may reserve only one of the plurality of pieces of charging information, delete other charging information, and perform charging processing based on the reserved charging information. Alternatively, the charging function network element may generate a corresponding CDR based on each of the plurality of pieces of charging information, send the CDR corresponding to each piece of charging information to the billing domain, and notify the billing domain of redundant charging information accordingly associated with the plurality of CDRs. The billing domain may select a CDR to perform a subsequent operation.

Optionally, when receiving a plurality of pieces of charging information for different charging scenarios, the charging function network element may perform charging processing based on the plurality of pieces of charging information.

Optionally, the charging function network element may obtain charging priorities of the plurality of first network elements. When receiving charging information of the plurality of first network elements, the charging function network element may perform charging processing based on charging information reported by a first network element with a highest charging priority.

For example, the charging priorities in descending order may be: the session management network element, the network capability exposure network element, the TSN AF network element, and the TSCTSF network element. In this case, if the charging function network element receives the charging information of the network capability exposure network element and the charging information of the TSN AF network element, the charging function network element performs charging processing based on the charging information of the network capability exposure network element; or if the charging function network element receives only the charging information of the TSN AF network element, the charging function network element performs charging processing based on the charging information of the TSN AF network element.

It may be understood that, in the foregoing embodiments, the methods and/or steps implemented by the first network element may alternatively be implemented by a component (for example, a processor, a chip, a chip system, a circuit, a logical module, or software) that may be used in the first network element, and the methods and/or steps implemented by the charging function network element may alternatively be implemented by a component (for example, a processor, a chip, a chip system, a circuit, a logical module, or software) that may be used in the charging function network element.

The foregoing mainly describes the solutions provided in this application. Accordingly, this application further provides a communication apparatus. The communication apparatus is configured to implement the foregoing various methods. The communication apparatus may be the first network element in the foregoing method embodiments, an apparatus including the first network element, or a component, for example, a chip or a chip system, that may be used in the first network element. Alternatively, the communication apparatus may be the charging function network element in the foregoing method embodiments, an apparatus including the charging function network element, or a component, for example, a chip or a chip system, that may be used in the charging function network element.

It may be understood that, to implement the foregoing functions, the communication apparatus includes a corresponding hardware structure and/or software module for performing the functions. A person skilled in the art should be easily aware that, with reference to the units and algorithm steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, the division into the modules is an example, and is merely logical function division. In actual implementation, another division manner may be used.

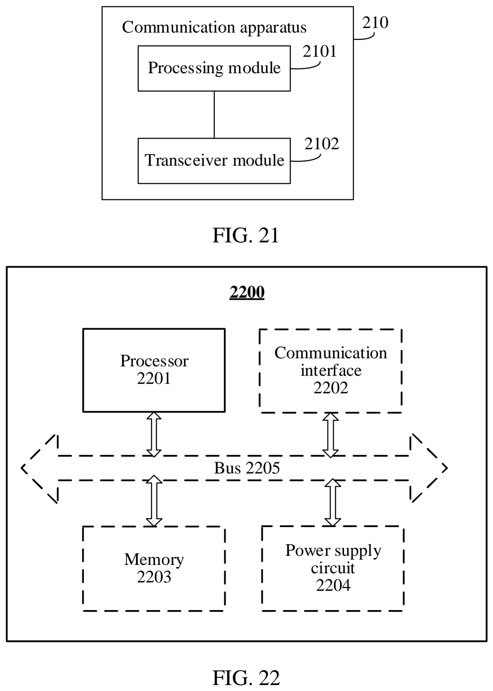

FIG. 21 is a diagram of a structure of a communication apparatus 210. The communication apparatus 210 includes a processing module 2101 and a transceiver module 2102. The communication apparatus 210 may be configured to implement the functions of the first network element or the charging function network element.

In some embodiments, the communication apparatus 210 may further include a storage module (which is not shown in FIG. 21), configured to store program instructions and data.

In some embodiments, the transceiver module 2102 may also be referred to as a transceiver unit, configured to implement a sending function and/or a receiving function. The transceiver module 2102 may include a transceiver circuit, a transceiver, or a communication interface.

In some embodiments, the transceiver module 2102 may include a receiving module and a sending module, respectively configured to perform receiving-type steps and sending-type steps performed by the first network element or the charging function network element in the foregoing method embodiments, and/or configured to support other processes of the technologies described in this specification. The processing module 2101 may be configured to perform processing-type (for example, determining) steps performed by the first network element or the charging function network element in the foregoing method embodiments, and/or configured to support other processes of the technologies described in this specification.

When the communication apparatus 210 is configured to implement the functions of the first network element,
the processing module 2101 is configured to determine first charging information, where the first charging information includes information for identifying a bridge provided by an operator network and information for determining a user of the bridge, the bridge includes a network-side time-sensitive networking translator NW-TT port and a device-side time-sensitive networking translator DS-TT port, the NW-TT port and the DS-TT port are separately communicatively connected to a device of a third-party network, and the NW-TT port is communicatively connected to the DS-TT port via a user plane network element and an access network device. The transceiver module 2102 is configured to send the first charging information to a charging function network element, where the first charging information is for charging the third-party network for using the bridge.

Optionally, the transceiver module 2102 is further configured to receive information about the bridge, where the information about the bridge includes information about the NW-TT port and/or information about the DS-TT port.

Optionally, the transceiver module 2102 is further configured to receive neighbor discovery information of an NW-TT or neighbor discovery information of a DS-TT, where the neighbor discovery information of the NW-TT includes information about a neighbor port of the NW-TT port, and the neighbor discovery information of the DS-TT includes information about a neighbor port of the DS-TT port; and the transceiver module 2102 is further configured to send second charging information to the charging function network element, where the second charging information includes at least one of the following: the information about the neighbor port of the NW-TT port, the information about the neighbor port of the DS-TT port, a delay on the NW-TT port, a data flow class supported by the NW-TT port, a delay on the DS-TT port, and a data flow class supported by the DS-TT port.

Optionally, the transceiver module 2102 is further configured to receive an updated policy and charging control PCC rule for the bridge, where the updated PCC rule for the bridge is for updating a quality of service QoS flow, and the quality of service flow is for carrying a data flow of the third-party network; and the transceiver module 2102 is further configured to send third charging information to the charging function network element, where the third charging information includes updated quality of service information.

Optionally, the processing module 2101 is further configured to determine that the quality of service flow for carrying the data flow of the third-party network starts, and the transceiver module 2102 is further configured to send fourth charging information to the charging function network element, where the fourth charging information includes at least one of the following: a TSC assistance container, quality of service information, and a quota request.

Optionally, the transceiver module 2102 is further configured to receive a clock drift report, where the clock drift report is for clock adjustment; and the transceiver module 2102 is further configured to send fifth charging information to the charging function network element, where the fifth charging information includes at least one of the following: a clock drift identifier, time-sensitive communication assistance information TSCAI, obtained through clock adjustment, of the data flow that is of the third-party network and that is transmitted via the bridge, or traffic usage, and the clock drift identifier indicates that a session management network element performs clock adjustment.

Optionally, the transceiver module 2102 is further configured to receive an application programming interface API invocation request message sent by an application function entity of the third-party network, where an API is for providing the third-party network with a service of using the bridge, and the API invocation request message includes the information for identifying the bridge, information about the user of the bridge, and an API operation indication; and the transceiver module 2102 is configured to send the first charging information to the charging function network element based on the API invocation request message, where the first charging information includes the information for identifying the bridge, the information about the user of the bridge, and the API operation indication.

Optionally, the transceiver module 2102 is further configured to send an API notification message to an application function entity of the third-party network, where an API is for providing the third-party network with a service of using the bridge, and the API notification message includes the information for identifying the bridge, the information about the user of the bridge, and an API operation indication; and the transceiver module 2102 is configured to send the first charging information to the charging function network element based on the API notification message, where the first charging information includes information about an execution result of the API operation indication.

Optionally, the transceiver module 2102 is further configured to receive, from a policy control network element, information related to the bridge, where the information related to the bridge is information sent to the third-party network, and the information related to the bridge includes at least one of the following: the information for identifying the bridge, the information about the user of the bridge, and an operation indication requested by the third-party network; and the transceiver module 2102 is configured to send the first charging information to the charging function network element based on the information related to the bridge, where the first charging information further includes information about an execution result corresponding to a requested operation indication.

Optionally, the transceiver module 2102 is further configured to receive a service invocation request message; and the transceiver module 2102 is configured to send the first charging information to the charging function network element based on the service invocation request message.

Optionally, the transceiver module 2102 is further configured to send a response message for a service invocation request; and the transceiver module 2102 is configured to send the first charging information to the charging function network element based on the response message.

When the communication apparatus 210 is configured to implement the functions of the charging function network element,
the transceiver module 2102 is configured to receive first charging information, and the processing module 2101 is configured to perform charging processing based on the first charging information, where the first charging information includes information for identifying a bridge and information for determining a user of the bridge, the bridge includes a network-side time-sensitive networking translator NW-TT port and a device-side time-sensitive networking translator DS-TT port, the NW-TT port and the DS-TT port are separately communicatively connected to a third-party network, and the NW-TT port is communicatively connected to the DS-TT port via a user plane network element and an access network device.

Optionally, the information for identifying the bridge is an identifier of the bridge and/or an identifier of the user plane network element.

Optionally, information about the user of the bridge includes at least one of the following: an identifier of an application function network element of the third-party network, a data network name DNN, an identifier of a network slice used by the third-party network, an external group identifier of the third-party network, or an internal group identifier of the third-party network.

Optionally, the first charging information further includes at least one quota request.

Optionally, the transceiver module 2102 is further configured to receive second charging information, where the second charging information includes at least one of the following: information about a neighbor port of the NW-TT port, information about a neighbor port of the DS-TT port, a delay on the NW-TT port, a data flow class supported by the NW-TT port, a delay on the DS-TT port, and a data flow class supported by the DS-TT port.

Optionally, the transceiver module 2102 is further configured to receive third charging information, where the third charging information includes updated quality of service information.

Optionally, the transceiver module 2102 is further configured to receive fourth charging information, where the fourth charging information includes at least one of the following: a TSC assistance container, quality of service information, and a quota request.

Optionally, the transceiver module 2102 is further configured to receive fifth charging information, where the fifth charging information includes at least one of the following: a clock drift identifier, time-sensitive communication assistance information TSCAI, obtained through clock adjustment, of a data flow that is of the third-party network and that is transmitted via the bridge, or traffic usage, and the clock drift identifier indicates that a session management network element performs clock adjustment.

All related content of the steps in the foregoing method embodiments may be cited in function descriptions of the corresponding functional modules. Details are not described herein again.

In this application, the communication apparatus 210 may be presented in a form of functional modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another component that can provide the foregoing functions.

In some embodiments, when the communication apparatus 210 in FIG. 21 is a chip or a chip system, an input/output interface (or a communication interface) of the chip or the chip system may implement a function/an implementation process of the transceiver module 2102, and a processor (or a processing circuit) of the chip or the chip system may implement a function/an implementation process of the processing module 2101.

Because the communication apparatus 210 provided in this embodiment may perform the foregoing methods, for technical effects that can be achieved by the communication apparatus 210, refer to the foregoing method embodiments. Details are not described herein again.

In a possible product form, the first network element or the charging function network element in embodiments of this application may be implemented by using the following: one or more field programmable gate arrays (field programmable gate arrays, FPGAs), a programmable logic device (programmable logic device, PLD), a controller, a state machine, gate logic, a discrete hardware component, any other suitable circuit, or any combination of circuits that can perform the functions in this application.

In another possible product form, the first network element or the charging function network element in this application may use a composition structure shown in FIG. 22, or include components shown in FIG. 22. FIG. 22 is a diagram of composition of a communication apparatus 2200 according to this application.

As shown in FIG. 22, the communication apparatus 2200 includes at least one processor 2201. Optionally, the communication apparatus further includes a communication interface 2202.

When related program instructions are executed in the at least one processor 2201, the apparatus 2200 may be enabled to implement the charging method provided in any one of the foregoing embodiments and any one of the possible designs thereof. Alternatively, the processor 2201 is configured to implement, by using a logic circuit or by executing code instructions, the charging method provided in any one of the foregoing embodiments and any one of the possible designs thereof.

The communication interface 2202 may be configured to: receive the program instructions and transmit the program instructions to the processor. Alternatively, the communication interface 2202 may be configured to perform communication interaction between the communication apparatus 2200 and another communication device, for example, exchange control signaling and/or service data. For example, the communication interface 2202 may be configured to: receive a signal from an apparatus other than the apparatus 2200, and transmit the signal to the processor 2201; or send a signal from the processor 2201 to a communication apparatus other than the apparatus 2200.

Optionally, the communication interface 2202 may be a code and/or data read/write interface circuit, or the communication interface 2202 may be a signal transmission interface circuit between a communication processor and a transceiver, or a pin of a chip.

Optionally, the communication apparatus 2200 may further include at least one memory 2203, and the memory 2203 may be configured to store the related program instructions and/or data that are/is needed. It should be noted that the memory 2203 may exist independently of the processor 2201, or may be integrated with the processor 2201. The memory 2203 may be located inside the communication apparatus 2200, or may be located outside the communication apparatus 2200. This is not limited.

Optionally, the communication apparatus 2200 may further include a power supply circuit 2204, and the power supply circuit 2204 may be configured to supply power to the processor 2201. The power supply circuit 2204 may be located in a same chip as the processor 2201, or may be located in a chip other than a chip in which the processor 2201 is located.

Optionally, the communication apparatus 2200 may further include a bus 2205, and parts of the communication apparatus 2200 may be interconnected through the bus 2205.

Optionally, the power supply circuit in this embodiment of this application includes but is not limited to at least one of the following: a power supply line, a power supply subsystem, a power management chip, a power consumption management processor, or a power consumption management control circuit.

In some embodiments, in hardware implementation, a person skilled in the art may figure out that the communication apparatus 210 shown in FIG. 21 may be in a form of the communication apparatus 2200 shown in FIG. 22.

In an example, the processor 2201 in the communication apparatus 2200 shown in FIG. 22 may invoke computer-executable instructions stored in the memory 2203 to implement a function/an implementation process of the processing module 2101 in FIG. 21. The communication interface 2202 in the communication apparatus 2200 shown in FIG. 22 may implement a function/an implementation process of the transceiver module 2102 in FIG. 21.

It should be noted that the structure shown in FIG. 22 does not constitute a specific limitation on the first network element or the charging function network element. For example, in some other embodiments of this application, the first network element or the charging function network element may include more or fewer components than those shown in the figure, some components may be combined, some components may be split, or the components may be differently arranged. The components shown in the figure may be implemented by hardware, software, or a combination of software and hardware.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. Certainly, the communication apparatus may alternatively not include a memory.

In another possible implementation, the communication apparatus further includes an interface circuit. The interface circuit is a code/data read/write interface circuit, and the interface circuit is configured to receive computer-executable instructions (the computer-executable instructions are stored in a memory, and may be directly read from the memory, or may be read via another component), and transmit the computer-executable instructions to the processor.

In still another possible implementation, the communication apparatus further includes a communication interface, and the communication interface may be configured to communicate with a module outside the communication apparatus.

It may be understood that the communication apparatus may be a chip or a chip system. When the communication apparatus is a chip system, the communication apparatus may include a chip, or may include the chip and another discrete component. This is not specifically limited in embodiments of this application.

This application further provides a computer-readable storage medium. The computer-readable storage medium stores a computer program or instructions. When the computer program or the instructions are executed by a computer, the functions in any one of the foregoing method embodiments are implemented.

This application further provides a computer program product. When the computer program product is executed by a computer, the functions in any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiments. Details are not described herein again.

It may be understood that the system, apparatuses, and methods described in this application may alternatively be implemented in another manner. For example, the foregoing apparatus embodiments are merely examples. For example, the division into the units is merely logical function division, and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may be physically separated or not, that is, may be located in one position, or may be distributed on a plurality of network units. Parts displayed as units may be or may not be physical units. Some or all of the units may be selected based on actual demands to achieve the objectives of the solutions in embodiments.

In addition, functional units in embodiments of this application may be integrated into one processing unit, each of the units may exist alone physically, or two or more units may be integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments herein, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to this application without departing from the scope of this application. Accordingly, the specification and accompanying drawings are merely example descriptions of this application defined by the accompanying claims, and are considered as covering any of or all modifications, variations, combinations, or equivalents within the scope of this application. It is clear that a person skilled in the art can make various modifications and variations to this application without departing from the scope of this application. This application is intended to cover these modifications and variations of this application provided that these modifications and variations fall within the scope of the claims of this application and their equivalent technologies.

## Claims

1. A charging method, wherein in a process in which at least one third-party network performs service control and/or data transmission via a bridge provided by an operator network, the method comprises:
determining first charging information, wherein the first charging information comprises information for identifying the bridge and information for determining a user of the bridge, the bridge comprises a network-side time-sensitive networking translator NW-TT port and a device-side time-sensitive networking translator DS-TT port, the NW-TT port and the DS-TT port are separately communicatively connected to a device of the third-party network, and the NW-TT port is communicatively connected to the DS-TT port via a user plane network element and an access network device; and
sending the first charging information to a charging function network element, wherein the first charging information is for charging the third-party network for using the bridge.

2. The method according to claim 1, wherein the information for identifying the bridge is an identifier of the bridge and/or an identifier of the user plane network element.

3. The method according to claim 1 or 2, wherein information about the user of the bridge comprises at least one of the following: an identifier of an application function network element of the third-party network, a data network name DNN, an identifier of a network slice used by the third-party network, an external group identifier of the third-party network, or an internal group identifier of the third-party network.

4. The method according to any one of claims 1 to 3, wherein the first charging information further comprises at least one quota request.

5. The method according to any one of claims 1 to 4, wherein the method further comprises:
receiving information about the bridge, wherein the information about the bridge comprises information about the NW-TT port and/or information about the DS-TT port.

6. The method according to any one of claims 1 to 5, wherein the method further comprises:
receiving neighbor discovery information of an NW-TT or neighbor discovery information of a DS-TT, wherein the neighbor discovery information of the NW-TT comprises information about a neighbor port of the NW-TT port, and the neighbor discovery information of the DS-TT comprises information about a neighbor port of the DS-TT port; and
sending second charging information to the charging function network element, wherein the second charging information comprises at least one of the following:
the information about the neighbor port of the NW-TT port, the information about the neighbor port of the DS-TT port, a delay on the NW-TT port, a data flow class supported by the NW-TT port, a delay on the DS-TT port, and a data flow class supported by the DS-TT port.

7. The method according to any one of claims 1 to 6, wherein the method further comprises:
receiving an updated policy and charging control PCC rule for the bridge, wherein the updated PCC rule for the bridge is for updating a quality of service QoS flow, and the quality of service flow is for carrying a data flow of the third-party network; and
sending third charging information to the charging function network element, wherein the third charging information comprises updated quality of service information.

8. The method according to any one of claims 1 to 7, wherein the method further comprises:
determining that the quality of service flow for carrying the data flow of the third-party network starts, and sending fourth charging information to the charging function network element, wherein the fourth charging information comprises at least one of the following: a TSC assistance container, quality of service information, and a quota request.

9. The method according to any one of claims 1 to 8, wherein the method further comprises:
receiving a clock drift report, wherein the clock drift report is for clock adjustment; and
sending fifth charging information to the charging function network element, wherein the fifth charging information comprises at least one of the following: a clock drift identifier, time-sensitive communication assistance information TSCAI, obtained through clock adjustment, of the data flow that is of the third-party network and that is transmitted via the bridge, or traffic usage, and the clock drift identifier indicates that a session management network element performs clock adjustment.

10. The method according to any one of claims 1 to 3, wherein the method further comprises:
receiving an application programming interface API invocation request message sent by an application function entity of the third-party network, wherein the API is for providing the third-party network with a service of using the bridge, and the API invocation request message comprises the information for identifying the bridge, the information about the user of the bridge, and the API operation indication; and
the sending the first charging information to a charging function network element comprises: sending the first charging information to the charging function network element based on the API invocation request message, wherein the first charging information comprises the information for identifying the bridge, the information about the user of the bridge, and the API operation indication.

11. The method according to claim 10, wherein the API invocation request message is a policy authorization subscription request message, the policy authorization subscription request message is for subscribing to a change of a PMIC and/or a change of a UMIC, and the policy authorization subscription request message comprises that the PMIC is associated with the DS-TT port and/or the NW-TT port and the UMIC is associated with the user plane network element.

12. The method according to claim 10, wherein the API invocation message is a neighbor discovery information invocation message and/or a neighbor discovery configuration invocation message, wherein the neighbor discovery information invocation message comprises information about the DS-TT port and/or information about the NW-TT port, and the neighbor discovery configuration invocation message is for configuring and activating a link layer discovery protocol LLDP agent; and the first charging information further comprises at least one of the following: the information about the DS-TT port and/or the information about the NW-TT port.

13. The method according to claim 10, wherein the API invocation message comprises an AF request message, and the AF request message indicates a transmission demand of a data flow of the third-party network; and
the first charging information further comprises at least one of the following: TSCAI, a QoS policy, a service data flow filter, and a bridging delay of the bridge.

14. The method according to claim 10, wherein the API invocation message comprises a port status subscription request message, and the port status subscription request message is for subscribing to a port status of the DS-TT port and/or a port status of the NW-TT port; and the first charging information further comprises port status subscription information.

15. The method according to any one of claims 1 to 3, wherein the method further comprises:
sending an API notification message to an application function entity of the third-party network, wherein the API is for providing the third-party network with a service of using the bridge, and the API notification message comprises the information for identifying the bridge, the information about the user of the bridge, and the API operation indication; and
the sending the first charging information to a charging function network element comprises: sending the first charging information to the charging function network element based on the API notification message, wherein the first charging information comprises information about an execution result of the API operation indication.

16. The method according to claim 15, wherein
the API notification message comprises delay information and/or a data flow class, wherein the delay information comprises a delay on the NW-TT port and/or a delay on the DS-TT port, and the data flow class comprises at least one of a data flow class supported by the NW-TT port and a data flow class supported by the DS-TT port; and
the first charging information further comprises at least one of the following: the delay on the NW-TT port, the delay on the DS-TT port, the data flow class supported by the NW-TT port, and the data flow class supported by the DS-TT port.

17. The method according to claim 15, wherein the API notification message is neighbor discovery notification information, and the neighbor discovery notification information comprises first neighbor discovery information and/or second neighbor discovery information, wherein the first neighbor discovery information comprises information about a neighbor port of the NW-TT port, and the second neighbor discovery information comprises information about a neighbor port of the DS-TT port; and
the first charging information further comprises the first neighbor discovery information and/or the second neighbor discovery information.

18. The method according to claim 15, wherein the API notification message comprises port status information, and the port status information indicates a port status of the DS-TT port and/or a port status of the NW-TT port; and the first charging information further comprises the port status information.

19. The method according to any one of claims 1 to 3, wherein the method further comprises:
receiving a message from a centralized network configuration CNC node, wherein the message from the CNC node is a request message of the third-party network, and the message from the CNC node comprises at least one of the following: the information for identifying the bridge, the information about the user of the bridge, and the requested operation indication; and
the sending the first charging information to a charging function network element comprises: sending the first charging information to the charging function network element based on the message from the CNC node, wherein the first charging information further comprises configuration and management information of the bridge and/or configuration information of a data flow of the third-party network.

20. The method according to any one of claims 1 to 3, wherein the method further comprises:
receiving, from a policy control network element, information related to the bridge, wherein the information related to the bridge is information sent to the third-party network, and the information related to the bridge comprises at least one of the following: the information for identifying the bridge, the information about the user of the bridge, and an operation indication requested by the third-party network; and
the sending the first charging information to a charging function network element comprises: sending the first charging information to the charging function network element based on the information related to the bridge, wherein the first charging information further comprises information about an execution result corresponding to the requested operation indication.

21. The method according to any one of claims 1 to 3, wherein the method further comprises:
receiving a service invocation request message; and
the sending the first charging information to a charging function network element comprises:
sending the first charging information to the charging function network element based on the service invocation request message.

22. The method according to any one of claims 1 to 3, wherein the method further comprises:
sending a response message for a service invocation request; and
the sending the first charging information to a charging function network element comprises:
sending the first charging information to the charging function network element based on the response message.

23. A charging method, wherein the method comprises:
receiving first charging information, wherein the first charging information comprises information for identifying the bridge and information for determining a user of the bridge, the bridge comprises a network-side time-sensitive networking translator NW-TT port and a device-side time-sensitive networking translator DS-TT port, the NW-TT port and the DS-TT port are separately communicatively connected to the third-party network, and the NW-TT port is communicatively connected to the DS-TT port via a user plane network element and an access network device; and
performing charging processing based on the first charging information.

24. The method according to claim 23, wherein the information for identifying the bridge is an identifier of the bridge and/or an identifier of the user plane network element.

25. The method according to claim 23 or 24, wherein information about the user of the bridge comprises at least one of the following: an identifier of an application function network element of the third-party network, a data network name DNN, an identifier of a network slice used by the third-party network, an external group identifier of the third-party network, or an internal group identifier of the third-party network.

26. A communication apparatus, wherein the communication apparatus comprises a processor, and the processor is configured to run a computer program or instructions, to enable the communication apparatus to perform the method according to any one of claims 1 to 22 or the method according to any one of claims 23 to 25.

27. A computer-readable storage medium, wherein the computer-readable storage medium stores computer instructions or a program; and when the computer instructions or the program is run on a computer, the method according to any one of claims 1 to 22 or the method according to any one of claims 23 to 25 is enabled to be performed.

28. A computer program product, wherein the computer program product comprises computer instructions; and when a part or all of the computer instructions are run on a computer, the method according to any one of claims 1 to 22 or the method according to any one of claims 23 to 25 is enabled to be performed.

29. A chip, comprising:
a memory, configured to store computer program instructions; and
a processor, configured to execute the computer program instructions, to enable a communication apparatus comprising the chip to perform the method according to any one of claims 1 to 22 or the method according to any one of claims 23 to 25.
